# EUROPEAN PATENT APPLICATION

(11) **EP 4 726 904 A1**
(43) Date of publication of application: **15.04.2026**
(21) Application number: 24818602.5
(22) Date of filing: 03.06.2024
(51) Int. Cl.: H01M 50/502, H01M 10/613, H01M 10/615

(54) **POLE ADAPTER, HIGH-CAPACITY BATTERY, AND ENERGY STORAGE DEVICE**

(30) Priority: 06.06.2023 CN 202321424460 U; 30.08.2023 CN 202322334983 U; 30.08.2023 CN 202311100698; 30.08.2023 CN 202322334974 U; 26.09.2023 CN 202322611733 U; 11.11.2023 CN 202323043213 U
(71) Applicant: D-Aus Energy Storage Technology (Xi'an) Co., Ltd, Xi' An, Shaanxi 710075 (CN)
(72) Inventor: CHEN, Mengqi, Shaanxi 710075 (CN); LEI, Zhengjun, Shaanxi 710075 (CN)
(74) Representative: Zermani Biondi Orsi, Umberto
(86) International application number: PCT/CN2024/096995
(87) International publication number: WO 2024/251070

(57) **Abstract**

A pole adapter, a high-capacity battery (2, 4), and an energy storage device. The pole adapter is adapted to be connected to poles of battery cells (21) and used for heating or cooling the poles. The high-capacity battery (2, 4) comprises a plurality of battery cells (21) having the pole adapters. The energy storage device comprises a plurality of said high-capacity batteries (2, 4). The pole adapter can overcome the problem of excessive heat, that may cause thermal runaway, at the poles of battery cells (21) in existing high-capacity batteries (2, 4).

## Description

### Technical Field

This present invention relates to the field of batteries, and specifically relates to a connecting member, a high-capacity battery, and an energy storage device.

### Background

At present, common high-capacity batteries are composed of a plurality of battery cells (battery cells are usually cylindrical batteries or square batteries) connected together in series, parallel, or series and parallel.

The temperature control of high-capacity batteries has always been a hot topic of concern in this field. For most existing high-capacity batteries, an air cooling or liquid cooling manner is configured to control the overall temperature of high-capacity batteries. However, due to the fact that the electrode terminal of a battery cell in a high-capacity battery is the most concentrated part of heat, when the local heat of the electrode terminal is too high, it is highly likely to cause thermal runaway of the battery cell in the high-capacity battery.

### Summary

In order to solve the problem of excessive heat, that may cause thermal runaway, at the positions of electrode terminals of battery cells in existing high-capacity batteries, some embodiments of this present invention provide a connecting member configured to be connected to electrode terminals of battery cells to heat or cool the electrode terminals.

On the basis of the above technical concept, this present invention provides a total of six implementations:

### Implementation 1:

According to a first aspect of this implementation, a connecting member is provided, includes a slender member, wherein the slender member is configured to be connected to positive electrode terminals or negative electrode terminals of a plurality of battery cells in a high-capacity battery; and the slender member is provided with a clamping part for mounting a heat transfer pipe along an axial direction of the slender member.

The connecting member on the high-capacity battery may achieve electrical connection between battery cells, and because the heat transfer pipe is mounted on the connecting member, the heat concentrated on the electrode terminal is able to be transferred from the connecting member to the heat transfer pipe and then carried away to an external temperature control apparatus for processing. Similarly, when the ambient temperature is too low and battery cells may not be started normally, the external temperature control apparatus may also heat each battery cell through the heat transfer pipe and the connecting member.

In addition, the connecting member is a slender member, and when the electrode terminals of each battery cell are connected through the slender member, the temperature distribution of the electrode terminals of each battery cell is more uniform during heating or cooling, so that the temperature control effect is better.

Compared to threaded connection or other manners, the above slender member is connected to the positive electrode terminal or negative electrode terminal of each battery cell by means of welding, and the welding manner is more reliable in connection and has a better heat conduction effect. For the convenience of welding and fixing, the slender member is a rectangular post, the clamping part is a groove formed in the rectangular post, and the size of the groove is matched with the heat transfer pipe. The heat transfer pipe is able to be mounted in the groove by means of clamping. This mounting manner facilitates the mounting, and the arrangement of the groove may provide a reasonable fusion welding thickness when laser fusion welding is used for the slender member and the positive and negative electrode terminals of the battery cell. The cross section of the above groove is C-shaped. The C-shaped groove has natural tension at an opening, which is conducive to more closely clamping the heat transfer pipe in the groove, thereby ensuring a better heat conduction effect between the connecting member and the heat transfer pipe. For the convenience of welding and fixing, the slender member is a rectangular post, the clamping part is a first through hole formed in the rectangular post, and the diameter of the first through hole is matched with the heat transfer pipe. The heat transfer pipe may penetrate through the first through hole. This mounting manner may increase the heat exchange area between the heat transfer pipe and the slender member, so that the heat conduction effect is better. The slender member is provided with a plurality of second through holes communicated with the first through hole, and the forming position of each of the plurality of second through holes needs to ensure that when the slender member is connected to each battery cell, the position below each of the plurality of second through holes corresponds to the positive electrode terminal or negative electrode terminal of a battery cell. The formation of the second through hole may provide a transmission channel for laser spots for laser fusion welding, so that the connecting member is able to be welded and fixed with the positive electrode terminal or negative electrode terminal of each battery cell.

According to a second aspect, this implementation provides a high-capacity battery. The high-capacity battery includes a main body of the high-capacity battery, heat transfer pipes, and the above connecting members; the main body of the high-capacity battery includes a plurality of battery cells arranged side by side; two connecting members are provided, one connecting member is connected to the positive electrode terminals of all of the plurality of battery cells to serve as a positive electrode terminal of the high-capacity battery, and the other connecting member is connected to the negative electrode terminals of all of the plurality of battery cells to serve as a negative electrode terminal of the high-capacity battery; and two heat transfer pipes are provided, and the two heat transfer pipes are respectively connected to the clamping parts of the two connecting members and are configured to achieve heat exchange with the electrode terminal of each battery cell.

According to a third aspect, this implementation provides an energy storage device, including N high-capacity batteries provided above and N-1 electrical connectors, wherein N≥2; the N high-capacity batteries are arranged side by side; two adjacent high-capacity batteries are connected in series through an electrical connector; and a part of the electrical connector is connected to the connecting member serving as a positive electrode terminal in a high-capacity battery, and the other part of the electrical connector is connected to the connecting member serving as a negative electrode terminal in another high-capacity battery. In this implementation, only one electrical connector is needed to connect every two high-capacity batteries in series to form an energy storage device, the structure is compact, and the assembly is simple.

In an implementation, the electrical connector includes at least one metal aluminum plate, and the metal aluminum plate is connected to the connecting member by means of screw connection. By means of screw connection, the assembly process is simpler. Moreover, the metal aluminum plate serves as an electrical connector. Due to excellent flexible deformation, the aluminum plate may provide buffering protection between adjacent high-capacity batteries. Even more, when the groove is used for clamping the heat transfer pipe, in order to more closely clamp the heat transfer pipe in the groove, an equal number of metal aluminum plates as battery cells may be used. On the one hand, a greater flow capacity may be provided; and on the other hand, the metal aluminum plate may provide a certain downward pressure for the heat transfer pipe to make the cooperation between the heat transfer pipe and the groove tighter, so that the heat conduction effect is better.

In an implementation, the electrical connector includes at least one metal aluminum plate, and the metal aluminum plate is integrated with two connecting members that are close to each other in two adjacent high-capacity batteries. This design is able to achieve the fixation of positive and negative electrode terminals and connecting members in each battery cell in a same high-capacity battery by means of welding once (that is, parallel connection between battery cells in the same high-capacity battery), and may also achieve series connection between adjacent high-capacity batteries without other additional assembly processes, so that the assembly is more concise.

### Implementation 2:

According to a first aspect of this implementation, a connecting member is provided, includes a slender member, wherein the slender member is configured to be connected to positive electrode terminals or negative electrode terminals of a plurality of battery cells in a high-capacity battery; and a heat exchange channel for transmitting a heat transfer medium is formed in the slender member.

The connecting member on the high-capacity battery may achieve electrical connection between battery cells, and because the heat exchange channel is arranged on the connecting member, the heat concentrated on the battery cell electrode terminal may be transferred from the connecting member to the heat transfer medium in the heat exchange channel and then carried away. Similarly, when the ambient temperature is too low and battery cells may not be started normally, each battery cell may also be heated through the heat transfer medium and the connecting member.

In addition, the connecting member is a slender member, and when the battery cell electrode terminals of each battery cell are connected through the slender member, the temperature distribution of the battery cell electrode terminals of each battery cell is more uniform during heating or cooling, so that the temperature control effect is better.

The axis of the above heat exchange channel is parallel to the axis in a length direction of the slender member and extends along an axial direction of the slender member. The above slender member is uniformly provided with a plurality of blind holes, the bottom of each of the plurality of blind holes is configured to be connected to the positive electrode terminal or negative electrode terminal of a battery cell, and the plurality of blind holes are separated from the heat exchange channel. However, in practical applications, it has been found that when the connecting member is provided with blind holes, the electrical conductivity of the connecting member is poor. Therefore, in this implementation, when the connecting member is connected to the battery cell electrode terminal, a conductive post is fixed in each of the plurality of blind holes, and an outer wall of the conductive post is in close contact with an inner wall of each of the plurality of blind holes, so as to improve the electrical conductivity of this part. In order to improve the strength of connection between the connecting member and the battery cell electrode terminal, the bottom of each of the plurality of blind holes is connected to the battery electrode terminal of the battery cell by means of welding. In order to eliminate the welding stress, the bottom of each of the plurality of blind holes is provided with a through hole communicated with each of the plurality of blind holes, and the diameter of the through hole is smaller than the diameter of each of the plurality of blind holes.

In an implementation, the above connecting member further includes an electrical connection post, wherein the electrical connection post is fixed in a region at the bottom of a main body of the connecting member corresponding to the plurality of blind holes; the electrical connection post is configured to be in contact with the positive electrode terminal or negative electrode terminal of the battery cell; and the plurality of blind holes extends to the electrical connection post. In a preparation process of a high-capacity battery, there is no need that using support ribs to lift a battery cell so that the battery cell electrode terminal thereof extends out of an electrode terminal avoiding hole in a top plate of a cylinder, and it is only necessary to insert an electrical connection post of a connecting member into the electrode terminal avoiding hole to connect to the electrode terminal of each battery cell in the cylinder.

In order to further improve the heat exchange effect, the slender member is provided with a clamping part for mounting a heat transfer pipe along an axial direction. The clamping part is a groove formed in the slender member, the size of the groove is matched with the heat transfer pipe, and the groove is separated from the heat exchange channel. When the heat transfer pipe is fixed in the groove, the heat transfer pipe and the heat exchange channel are used in conjunction to exchange heat with the battery cell electrode terminal of the high-capacity battery, resulting in higher heat exchange efficiency.

In an implementation, the groove is communicated with the plurality of blind holes.

According to a second aspect of this implementation, a high-capacity battery is provided, includes a plurality of battery cells and two connecting members provided above; the plurality of battery cells are sequentially arranged along a same direction; and one connecting member is connected to the positive electrode terminals of all battery cells, and the other connecting member is connected to the negative electrode terminals of all battery cells.

In an implementation, the above high-capacity battery further includes a housing, wherein a plurality of battery cells are sequentially arranged in the housing along a same direction; a top plate of the housing is provided with electrode terminal avoiding holes corresponding to the electrode terminal of each battery cell, and a region of the housing corresponding to the electrode terminal avoiding hole and a case of the battery cell are fixedly sealed; and an electrical connection post of the connecting member extends into the electrode terminal avoiding hole and is electrically connected to the electrode terminal of each battery cell.

### Implementation 3:

According to a first aspect of this implementation, a connecting member is provided, includes a main body of the connecting member. The main body of the above connecting member is provided with n first holes and is connected to the electrode terminal of a battery cell through each of the n first holes, wherein n≥1. In this implementation, by arranging the connecting member on the electrode terminal of the battery cell, the heat dissipation area of the electrode terminal is increased. When such battery cells are grouped, the heat concentrated on the electrode terminal may be dissipated from the connecting member, thereby reducing the risk of thermal runaway. In addition, when the main body of the connecting member is provided with a plurality of first holes, the main body of the connecting member is a slender member, and when the electrode terminals of each battery cell are connected through the slender member, the temperature distribution of the electrode terminals of each battery cell is more uniform, so that the heat dissipation effect is better.

In order to improve the electrical conductivity of the connecting member, the above connecting member further includes n conductive posts, wherein the above n conductive posts correspond to the n first holes one by one and are fixed in the above first holes, and an outer wall of the conductive post is in close contact with an inner wall of the first hole. The heat conductivity of the connecting member may be improved while improving the electrical conductivity. In order to improve the reliability of connection between the connecting member and the electrode terminal, the above first hole is a blind hole, and the bottom of the plurality of blind holes is connected to a battery cell electrode terminal by means of welding. In order to eliminate the welding stress, the bottom of each of the plurality of blind holes is provided with a through hole communicated with each of the plurality of blind holes, and the diameter of the above through hole is smaller than the diameter of each of the plurality of blind holes. The above connecting member may further be provided with a groove for mounting a heat transfer pipe, and the size of the above groove is matched with the heat transfer pipe. When the heat transfer pipe is fixed in the groove, the heat concentrated on the electrode terminal may also be transferred from the connecting member to the heat transfer pipe and then carried away. Similarly, when the ambient temperature is too low and battery cells may not be started normally, an external temperature control apparatus is also able to heat each battery cell through the heat transfer pipe.

Four threaded holes are uniformly distributed in regions of the main body of the connecting member around the plurality of blind holes. In an implementation, the main body of the connecting member provided with one first hole is used for constructing a high-capacity battery, the first electrical connector and the connecting member are connected through screws. Compared to the direct connection between the first electrical connector and the electrode terminal of each battery cell, the first electrical connector has a tighter contact with the connecting member through four threaded holes cooperating with screws in the implementation.

During construction of an energy storage device, the second electrical connector and the connecting member are connected through screws. Compared to the direct connection between the second electrical connector and the electrode terminal of each battery cell, the second electrical connector has a tighter contact with the connecting member through four threaded holes cooperating with screws in the implementation.

According to a second aspect of this implementation, a high-capacity battery is provided, includes m battery cells and a first electrical connector, wherein each of the m battery cells includes a positive electrode terminal and a negative electrode terminal, and the positive electrode terminal and the negative electrode terminal are both connected with above connecting members; and the connecting members of each battery cell are connected through the first electrical connector to achieve series or parallel connection between battery cells.

According to a third aspect of this implementation, a high-capacity battery is provided, includes m battery cells (m>1) and further includes two above connecting members, wherein the main body of the connecting member is provided with m first holes; and one connecting member is connected to the positive electrode terminals of all of the m battery cells, and the other connecting member is connected to the negative electrode terminals of all of the m battery cells.

The above high-capacity battery may further include heat transfer pipes; and the heat transfer pipe is mounted in the groove on the main body of the connecting member. The heat transfer pipes are arranged in a serpentine manner to connect all connecting members in series.

According to a fourth aspect of this implementation, an energy storage device is provided, includes a plurality of above high-capacity batteries and a second electrical connector, wherein the plurality of high-capacity batteries are arranged side by side; two adjacent high-capacity batteries are connected in series through the second electrical connector; and one side of the second electrical connector is connected to the connecting member on the positive electrode terminal of each battery cell of a high-capacity battery, and the other side of the second electrical connector is connected to the connecting member on the negative electrode terminal of each battery cell of another high-capacity battery.

### Implementation 4:

According to a first aspect of this implementation, a connecting member is provided, includes a main body of the connecting member and n electrical connection posts fixed on the main body of the connecting member and protruding from the main body of the connecting member, wherein n≥1; and the main body of the connecting member is provided with n first holes in one-to-one correspondence to the electrical connection posts, and each electrical connection post is connected to a battery cell electrode terminal through each of the n first holes. In this implementation, by additionally arranging the connecting member on the electrode terminal of the battery cell, the heat dissipation area of the electrode terminal is increased. When such battery cells are grouped, the heat concentrated on the electrode terminal may be dissipated from the connecting member, thereby reducing the risk of thermal runaway. In addition, by using the connecting member, preparation processes of related high-capacity batteries may be simplified. In preparation processes of related high-capacity batteries, there is no need that using support ribs to lift a battery cell so that the electrode terminal thereof extends out of an electrode terminal avoiding hole in a top plate of a cylinder, and it is only necessary to insert an electrical connection post of a connecting member into the electrode terminal avoiding hole to connect to the electrode terminal of each battery cell in a housing.

In order to improve the electrical conductivity of the electrical connection post, the connecting member further includes n conductive posts, wherein the above n conductive posts correspond to n first holes one by one and are fixed in the above first holes, and an outer wall of the conductive post is in close contact with an inner wall of the first hole. The above first hole is a blind hole and extends to the electrical connection post. The connection between the bottom of each of the plurality of blind holes and the electrode terminal may generally be achieved by means of screw connection or welding.

In order to improve the strength of connection between the connecting member and the electrode terminal, the bottom of each of the plurality of blind holes is connected to the battery cell electrode terminal by means of welding. In order to eliminate the welding stress, the bottom of the plurality of blind holes is provided with a through hole communicated with the plurality of blind holes, and the diameter of the above through hole is smaller than the diameter of each of the plurality of blind holes. In order to improve the safety performance of such high-capacity batteries, the above main body of the connecting member is a rectangular block, and the main body of the connecting member is provided with a clamping part for mounting a heat transfer pipe. The above clamping part is a groove formed in the main body of the connecting member, and the size of the above groove is matched with the heat transfer pipe. The above groove is communicated with the above blind hole.

According to a second aspect of this implementation, a high-capacity battery is provided, includes a housing, m battery cells arranged in the housing, and 2m above connecting members, wherein m>1; an electrical connection post is fixed on the main body of the connecting member; the housing is composed of a cylinder and end plates fixed at two ends of the cylinder; a top plate of the cylinder is provided with electrode terminal avoiding holes corresponding to the electrode terminal of each battery cell, and a region of the housing corresponding to the electrode terminal avoiding hole and a case of the battery cell are fixedly sealed; and the positive electrode terminal and negative electrode terminal of each battery cell both correspond to a connecting member, and the electrical connection post of each connecting member extends into the electrode terminal avoiding hole and is respectively connected to the electrode terminal corresponding to the battery cell.

According to a third aspect of this implementation, a high-capacity battery is provided, includes a housing, m battery cells arranged in the housing, and two above connecting members, wherein m>1; m electrical connection posts are fixed on the main body of the connecting member; the housing is composed of a cylinder and end plates fixed at two ends of the cylinder; a top plate of the cylinder is provided with electrode terminal avoiding holes corresponding to the electrode terminal of each battery cell, and a region of the housing corresponding to the electrode terminal avoiding hole and a case of the battery cell are fixedly sealed; and m electrical connection posts of one connecting member respectively extend into the corresponding electrode terminal avoiding holes and are connected to the positive electrode terminal of each battery cell, and m electrical connection posts of the other connecting member respectively extend into the corresponding electrode terminal avoiding holes and are connected to the negative electrode terminal of each battery cell.

According to a fourth aspect of this implementation, an energy storage device is provided, includes a plurality of above high-capacity batteries and an electrical connector, wherein the plurality of high-capacity batteries are arranged side by side; two adjacent high-capacity batteries are connected in series through the electrical connector; and one side of the electrical connector is connected to the connecting member on the positive electrode terminal of each battery cell of a high-capacity battery, and the other side of the electrical connector is connected to the connecting member on the negative electrode terminal of each battery cell of another high-capacity battery.

### Implementation 5:

This implementation provides a connecting member, including a main body of the connecting member and an electrical connection component arranged on the main body of the connecting member, wherein the above main body of the connecting member is configured to be connected to the electrode terminal of each battery cell, and the main body of the connecting member is provided with a clamping part for mounting a liquid cooling pipe; and the above electrical connection component is configured to be connected to an external electrical connector and to prevent the overflow of an insulated sealant from a part of a sealant injection region. In this implementation, the main body of the connecting member is provided with a clamping part for mounting a liquid cooling pipe. When the liquid cooling pipe is fixed at the clamping part, the heat concentrated on the electrode terminal may also be transferred from the connecting member to the liquid cooling pipe and then carried away. Similarly, when the ambient temperature is too low and battery cells may not be started normally, an external temperature control apparatus may also heat each battery cell through the liquid cooling pipe. In addition, an electrical connection component is additionally arranged on the main body of the connecting member, wherein a part of the structure of the electrical connection component is connected to the external electrical connector and is also able to be directly used as an electrical connector to achieve series connection between at least two high-capacity batteries; and the other part of the structure of the electrical connection component may be used as a sealant blocking structure to prevent the overflow of an insulated sealant from a part of a sealant injection region. When an insulated sealant layer with a thickness greater than that of the connecting member is laid on the top plate of the housing, the use of some sealant injection molds may be reduced, and the sealant injection process may be simplified.

The above electrical connection component is an inverted L-shaped plate; a vertical plate of the inverted L-shaped plate is parallel to an xz plane, and is fixed on a top surface of the connecting member to prevent the overflow of the insulated sealant from the part of the sealant injection region; the above part of the sealant injection region is the top surface of the connecting member; and a transverse plate of the inverted L-shaped plate is parallel to an xy plane, and is configured to be connected to an external electrical connector or is configured to serve as an electrical connector. By using the electrical connection component which is the inverted L-shaped plate, in this case, a sealant may be injected on the top surface of the connecting member, the vertical plate may prevent the overflow of the insulated sealant from the top surface of the connecting member, and the transverse plate is connected to the external electrical connector, may also be directly used as an electrical connector, has a simple structure, and may further be integrally formed with the connecting member.

In an implementation, the above electrical connection component further includes a first bearing plate, and the above first bearing plate is parallel to the xz plane, is fixed on the transverse plate of the inverted L-shaped plate, and extends to the direction of a bottom surface of the connecting member.

In an implementation, the above electrical connection component is a Z-shaped plate, including a first electrical connection plate, a second electrical connection plate, and a third connection plate; the first electrical connection plate is parallel to the xy plane, and covers and is fixed on the top surface of the connecting member; a top surface of the first electrical connection plate serves as the part of the sealant injection region; a surface, cooperating with the top surface of the connecting member, of the first electrical connection plate is provided with a liquid cooling pipe avoiding notch; the third connection plate is located between the first electrical connection plate and the second electrical connection plate and is configured to prevent the overflow of the insulated sealant from the part of the sealant injection region, and the above part of the sealant injection region is the top surface of the first electrical connection plate; and the second electrical connection plate is parallel to the xy plane, and is configured to be connected to an external electrical connector.

The electrical connection component which is the Z-shaped plate is used, and the first electrical connection plate may cover and is fixed on the top surface of the connecting member. In this case, a sealant may be injected on the top surface of the first electrical connection plate of the Z-shaped plate, the third connection plate may prevent the overflow of the insulated sealant from the top surface of the first electrical connection plate, and the second electrical connection plate is connected to the external electrical connector and may also be directly used as an electrical connector. The electrical connection component and the connecting member are separately arranged. When the electrical connection component is fixed on the connecting member, the effect of compressing the liquid cooling pipe may also be achieved, the contact area between the liquid cooling pipe and the clamping part of the liquid cooling pipe may be increased, and the heat exchange efficiency may be improved.

In an implementation, the above electrical connection component further includes an L-shaped electrical connection plate, a vertical connection plate of the L-shaped electrical connection plate is connected to the second electrical connection plate, and a transverse connection plate of the L-shaped electrical connection plate extends towards a direction away from the first electrical connection plate, and is configured to be connected to an external electrical connector or is configured to serve as an electrical connector.

In an implementation, the above main body of the connecting member includes n electrical connection posts fixed on the connecting member and protruding from the connecting member, wherein n≥1; and the connecting member is provided with n first holes in one-to-one correspondence to the electrical connection posts, and each electrical connection post is connected to a battery cell electrode terminal through each of the n first holes. The above clamping part is a groove formed in the connecting member, and the size of the above groove is matched with the liquid cooling pipe.

### Implementation 6:

According to a first aspect of this implementation, a connecting member is provided. The connecting member is provided with both an insulated layer and an insulated sleeve in a groove or through hole provided with a heat transfer pipe in a conductive post body to form double insulation. Due to the double insulation, when the heat transfer pipe exchanges heat with the connecting member of the battery cell, even if one of the insulated layer and the insulated sleeve is damaged, reliable insulation performance may still be maintained between the heat transfer pipe and the connecting member of the battery cell, thereby improving the safety of the battery cell during use. In the connecting member provided in this implementation, the insulated layer is a hard oxide layer formed by oxidation treatment of the groove or through hole of the conductive post body, with a thickness of 20 um to 50 um. The insulated layer having this structure is not prone to failure and has strong insulation stability.

In the connecting member provided in this implementation, the insulated layer is an insulated paint coated in the groove or through hole of the conductive post body. The insulated layer having this structure is easy to process on site, processing steps are simple, and processing costs are relatively low. In the connecting member provided in this implementation, a heat-conductive plastic sleeve or heat-conductive rubber sleeve with better insulation performance and heat conductivity is used as the insulated sleeve, the thickness of the insulated sleeve ranges from 0.1 mm to 0.5 mm, and this thickness ensures excellent insulation performance of the insulated sleeve and also ensures excellent heat conductivity. In the connecting member provided in this implementation, the insulated sleeve is arranged in the groove or through hole of the conductive post body with the insulated layer by means of heat shrinkage. This manner may ensure that there is almost no heat conduction gap between the insulated sleeve and the groove or through hole of the conductive post body, so that the heat conduction effect of the insulated sleeve is better. In the connecting member provided in this implementation, the cross section of the groove is C-shaped or U-shaped, so that the heat transfer pipe may be reliably mounted in the groove.

According to a second aspect of this implementation, a high-capacity battery is provided. The high-capacity battery includes a housing, a plurality of battery cells, and connecting members, wherein the plurality of battery cells are arranged in the housing side by side, a shared chamber is arranged in the housing to enable at least one of gas regions and electrolyte regions of each battery cell to achieve intercommunication, and the top of the housing is provided with electrode terminal avoiding holes corresponding to the battery cell electrode terminal of each battery cell; the battery cell electrode terminal of each battery cell is connected to the connecting member through the electrode terminal avoiding hole; and the connecting member is any one of the above connecting members, and a heat transfer pipe is arranged in the groove or through hole of the connecting member of each battery cell.

### Brief Description of the Drawings

Fig. 1 is a structural view of a slender member corresponding to a clamping part in an example 2 in Embodiment 1;
Fig. 2 is a structural view of a high-capacity battery corresponding to a clamping part in an example 2 in Embodiment 1;
Fig. 3 is a structural view of a slender member corresponding to a clamping part in an example 3 in Embodiment 1;
Fig. 4 is a structural view of a high-capacity battery corresponding to a clamping part in an example 3 in Embodiment 1;
Fig. 5 is a schematic structural view 1 of a high-capacity battery with an electrolyte sharing function in Embodiment 2;
Fig. 6 is a schematic structural view 2 of a high-capacity battery with an electrolyte sharing function in Embodiment 2;
Fig. 7 is a schematic structural view 1 of a high-capacity battery with a gas balance function or an explosion venting function in Embodiment 2;
Fig. 8 is a schematic structural view 2 of a high-capacity battery with a gas balance function or an explosion venting function in Embodiment 2;
Fig. 9 is a schematic structural view 1 of a high-capacity battery with an electrolyte sharing function and a gas balance function in Embodiment 2;
Fig. 10 is a schematic structural view 2 of a high-capacity battery with an electrolyte sharing function and a gas balance function in Embodiment 2;
Fig. 11 is a schematic structural view of an integrated electrical connector in Embodiment 3;
Fig. 12 is a schematic structural view of an energy storage device in Embodiment 3;
Fig. 13 is a schematic structural view of a connecting member in Embodiment 4;
Fig. 14 is a schematic structural view of a connecting member in Embodiment 5;
Fig. 15 is a schematic exploded view of a connecting member with conductive posts in Embodiment 5;
Fig. 16 is a schematic structural view of a cylinder of a high-capacity battery in Embodiment 6;
Fig. 17 is a schematic structural view of a cylinder of another high-capacity battery in Embodiment 6;
Fig. 18 is a schematic structural view of a connecting member in Embodiment 6;
Fig. 19 is a schematic structural view of a connecting member in Embodiment 6 from another perspective;
Fig. 20 is a cross-sectional view of a connecting member in Embodiment 6;
Fig. 21 is a partial cross-sectional view of a high-capacity battery in Embodiment 6;
Fig. 22 is a schematic structural view of a connecting member in Embodiment 7;
Fig. 23 is a schematic structural view of a high-capacity battery in Embodiment 9;
Fig. 24 is a schematic structural view of another high-capacity battery in Embodiment 9;
Fig. 25 is a schematic structural view of a connecting member in Embodiment 11;
Fig. 26 is a schematic structural view of battery cells in Embodiment 11 and Embodiment 4;
Fig. 27 is a schematic structural view of a connecting member provided with a conductive post in Embodiment 11;
Fig. 28 is a schematic exploded view of a connecting member provided with a conductive post in Embodiment 11;
Fig. 29 is a schematic structural view of a connecting member in Embodiment 12;
Fig. 30 is a schematic structural view of a connecting member in Embodiment 13;
Fig. 31 is a schematic structural view of another connecting member in Embodiment 13;
Fig. 32 is a schematic structural view of a high-capacity battery in Embodiment 15;
Fig. 33 is a schematic structural view of another high-capacity battery in Embodiment 15;
Fig. 34 is a schematic structural view of a third high-capacity battery in Embodiment 15;
Fig. 35 is a schematic structural view of a high-capacity battery in Embodiment 16;
Fig. 36 is a schematic structural view of another high-capacity battery in Embodiment 16;
Fig. 37 is a schematic structural view of a high-capacity battery in Embodiment 17;
Fig. 38 is a schematic structural view of another high-capacity battery in Embodiment 17;
Fig. 39 is a schematic structural view of a third high-capacity battery in Embodiment 17;
Fig. 40 is a schematic structural view of a high-capacity battery in a related art;
Fig. 41 is a schematic structural view of a cylinder of a high-capacity battery in a related art;
Fig. 42 is a schematic structural view of another cylinder of a high-capacity battery in a related art;
Fig. 43 is a schematic structural view of a connecting member in Embodiment 19;
Fig. 44 is a schematic structural view of a connecting member in Embodiment 19 from another perspective;
Fig. 45 is a partial cross-sectional view of a high-capacity battery in Embodiment 19;
Fig. 46 is a schematic structural view of a connecting member provided with a blind hole in Embodiment 19;
Fig. 47 is a schematic structural view of a connecting member provided with a blind hole in Embodiment 19 from another perspective;
Fig. 48 is a schematic exploded view of a connecting member provided with a conductive post in Embodiment 19;
Fig. 49 is a cross-sectional view of a connecting member provided with a conductive post in Embodiment 19;
Fig. 50 is a schematic structural view of a connecting member in Embodiment 20;
Fig. 51 is a schematic structural view of a connecting member in Embodiment 21;
Fig. 52 is a schematic structural view of a connecting member in Embodiment 21 from another perspective;
Fig. 53 is a schematic structural view of another connecting member in Embodiment 21;
Fig. 54 is a schematic structural view of a third connecting member in Embodiment 21;
Fig. 55 is a schematic structural view of a high-capacity battery in Embodiment 22;
Fig. 56 is a schematic structural view of another high-capacity battery in Embodiment 22;
Fig. 57 is a schematic structural view of a high-capacity battery in Embodiment 23;
Fig. 58 is a schematic structural view of another high-capacity battery in Embodiment 23;
Fig. 59 is a schematic structural view of a high-capacity battery in a related art;
Fig. 60 is a cross-sectional view of a high-capacity battery in a related art;
Fig. 61 is a schematic structural view of a connecting member in Embodiment 25;
Fig. 62 is a cross-sectional view of a connecting member in Embodiment 25;
Fig. 63 is a schematic structural view of a high-capacity battery in Embodiment 26;
Fig. 64 is a partial schematic exploded view of a high-capacity battery in Embodiment 27;
Fig. 65 is a schematic structural view of a high-capacity battery in Embodiment 27;
Fig. 66 is a schematic structural view of an insulated frame body in Embodiment 27;
Fig. 67 is a partial schematic structural view of a high-capacity battery in Embodiment 27;
Fig. 68 is a cross-sectional view of a high-capacity battery in Embodiment 27;
Fig. 69 is a cross-sectional view of a connecting member in Embodiment 28;
Fig. 70 is a cross-sectional view of a high-capacity battery in Embodiment 29;
Fig. 71 is a schematic structural view of an electrical connection component in Embodiment 30;
Fig. 72 is a cross-sectional view of a connecting member in Embodiment 30;
Fig. 73 is a cross-sectional view of a high-capacity battery in Embodiment 31;
Fig. 74 is a schematic structural view of an insulated frame body in Embodiment 32;
Fig. 75 is a partial schematic structural view of a high-capacity battery in Embodiment 32;
Fig. 76 is a cross-sectional view of a high-capacity battery in Embodiment 32;
Fig. 77 is a schematic structural view of an electrical connection component in Embodiment 33;
Fig. 78 is a cross-sectional view of a high-capacity battery in Embodiment 34;
Fig. 79 is an exploded view of a polarity terminal (the polarity terminal is a connecting member of a battery cell) in Embodiment 35 of the present invention;
Fig. 80 is a schematic structural view 1 of a high-capacity battery in Embodiment 36 of the present invention; and
Fig. 81 is a schematic structural view 2 of a high-capacity battery in Embodiment 36 of the present invention.

List of Reference Numerals: 1. slender member; 11. clamping part; 112. first through hole; 113. second through hole; 2. high-capacity battery; 21. battery cell; 3. heat transfer pipe; 4. high-capacity battery; 5. housing; 51. electrolyte sharing chamber; 52. gas chamber; 6. first hollow member; 7. second hollow member; 8. electrical connector; 81. metal aluminum plate; 22. main body of connecting member; 42. first hole; 23. conductive post; 26. groove; 46. threaded hole; 481. insulated joint; 49. top plate of housing; 03. top plate of cylinder; 04. electrode terminal avoiding hole; 05. bottom plate of cylinder; 07. end plate; 08. battery cell electrode terminal; 24. blind hole; 25. electrical connection post; 32. heat exchange channel; 49. top plate of housing; 513. sealed connector; 514. liquid cooling pipe; 533. outer side surface of connecting member; 34. electrical connection component; 341. vertical plate; 342. transverse plate; 343. first electrical connection plate; 344. second electrical connection plate; 345. third connection plate; 346. liquid cooling pipe avoiding channel; 35. bottom surface of connecting member; 36. top surface of connecting member; 37. side surface of connecting member; 10. insulated shield; 101. second side wall; 102. slit; 103. first side wall; 104. insulated frame body; 1041. long frame; 1042. first surface; 1043. sealant blocking plate; 1044. reinforcing rib; 105. insulated cover plate; 106. baffle; 107. second insulated frame; 108. insulated bottom plate; 1081. electrical connection post avoiding hole; 1082. partition; 109. accommodating cavity of connecting member; 110. annular sealant blocking ring; 111. annular groove; 112. first partition; 113. second partition; 114. third partition; 115. fourth partition; 38. L-shaped electrical connection plate; 39. vertical connection plate; 40. transverse connection plate; 541. first bearing plate; 542. second bearing plate; 42. first hole; 44. through hole; a. first gap; b. second gap; c. third gap; d. fourth gap; f. hollowed-out region; 915. insulated layer; 916. insulated sleeve.

### Detailed Description of the Embodiments

In order to make the above objectives, features and advantages of this present invention more obvious and understandable, specific implementations of this present invention will be described in detail below with reference to the accompanying drawings of the specification. It is apparent that the described embodiments are only a part of the embodiments of this present invention, but are not all of the embodiments. All other embodiments obtained by those of ordinary skill in the art based on the embodiments in this present invention without creative work shall fall within the scope of protection of this present invention.

Many specific details are elaborated in the following description to facilitate the full understanding of this present invention. However, this present invention may also be implemented in other ways different from those described herein. Those skilled in the art may make similar promotions without departing from the content of this present invention, therefore, this present invention is not limited by specific embodiments disclosed below.

In the description of this present invention, it should be noted that the orientation or position relationship indicated by terms such as "top and bottom" is based on the orientation or position relationship shown in the accompanying drawings, and is only for the convenience of describing this present invention and simplifying the description, rather than indicating or implying that the mentioned apparatus or component needs to have a specific orientation or needs to be constructed and operated in a specific orientation. Therefore, this should not be understood as a limitation on this present invention. In addition, terms such as "first, second, third, and fourth" are used for descriptive purposes only, but may not be construed as indicating or implying relative importance.

Embodiment 1 to Embodiment 3 provide a connecting member and a high-capacity battery and energy storage device with the connecting member.

In Embodiment 1 to Embodiment 3, a battery cell refers to a commercially available battery, or a similar square battery composed of commercially available square lithium batteries or a plurality of pouch batteries connected in parallel and then placed in an aluminum square shell.

The heat transfer pipe may be a water cooling pipe, a copper pipe, a copper bar, or a heat pipe. The heat pipe is an evaporative-condensation type heat exchange device that transmits heat through changes in the state of a working medium in the pipe. When one end of the heat pipe is heated, the working medium in the pipe vaporizes. When vaporization, the steam flows towards the other end and condenses upon cooling, so as to release latent heat to a heat dissipation region. The condensation heat returns under the action of capillary force and gravity and continues to be heated for vaporization. Through this reciprocating cycle, a large amount of heat is transferred from a heating region to the heat dissipation region. Heat transfer is performed through a phase change process of the working medium.

In order to solve the problem of excessively high local temperature in the electrode terminal, the inventors attempted to directly form a groove on the electrode terminal of each battery cell of a high-capacity battery to mount a heat transfer pipe for heat exchange, but this example has the following problems:
1. If the groove is directly processed on the electrode terminal of a battery cell, it will have a certain impact on the performance of the battery cell, and the processing difficulty is relatively high.
2. If a battery cell with a groove on the electrode terminal is customized before forming the battery cell, almost all existing battery manufacturers do not accept orders.
3. If we directly produce electrode assemblies with grooves and then assemble the electrode assemblies into a battery cell, the operation and investment costs of the battery production line in the early stage will be huge.

Based on this, the inventors changed the idea to consider that a connecting member for clamping a heat transfer pipe is additionally arranged on the electrode terminal of a battery cell directly (that is, a groove or through hole is arranged on the connecting member).

Embodiment 1 to Embodiment 3 provide the following design idea: the positive electrode terminals or negative electrode terminals of a plurality of battery cells are connected through connecting members, and heat transfer pipes are clamped on the connecting members, so as to control the local temperature of the electrode terminal of each battery cell, thereby greatly reducing the occurrence of thermal runaway caused by excessively high electrode terminal temperature.

### Embodiment 1

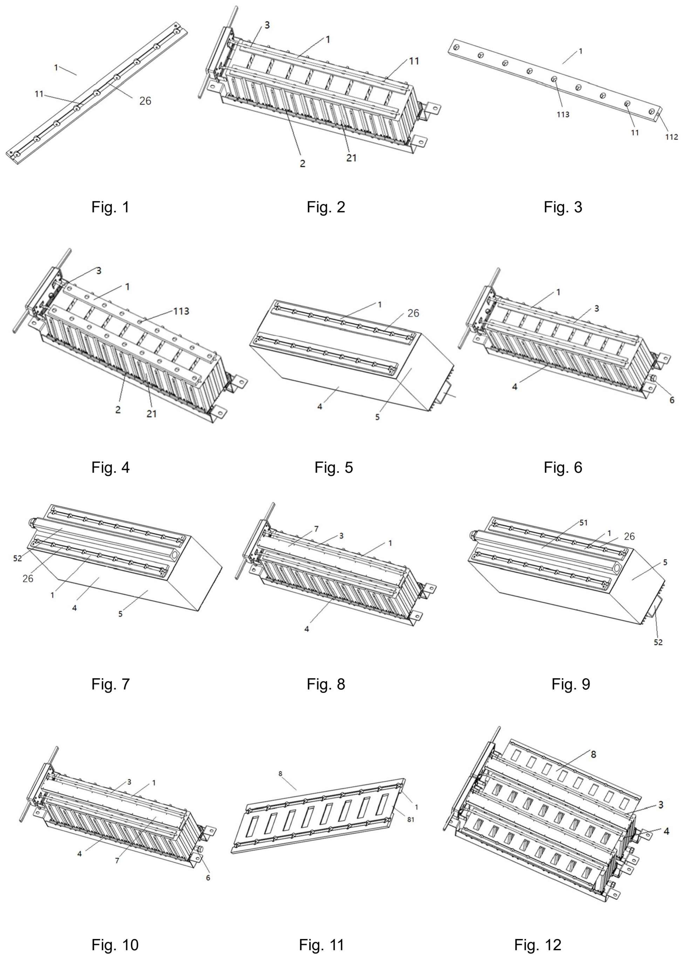

As shown in Fig. 1 and Fig. 2, a connecting member provided in this embodiment includes a slender member 1, wherein the slender member 1 is configured to be connected to positive electrode terminals or negative electrode terminals of a plurality of battery cells 21 in a high-capacity battery 2; and the slender member 1 is provided with a clamping part 11 for mounting a heat transfer pipe 3 along an axial direction.

The connecting member on the high-capacity battery may achieve electrical connection between battery cells, and because the heat transfer pipe is mounted on the connecting member, the heat concentrated on the electrode terminal may be transferred from the connecting member to the heat transfer pipe and then carried away to an external temperature control apparatus for processing. Similarly, when the ambient temperature is too low and battery cells may not be started normally, the external temperature control apparatus may also heat each battery cell through the heat transfer pipe and the connecting member.

In addition, the connecting member is a slender member, and when the electrode terminals of each battery cell are connected through the slender member, the temperature distribution of the electrode terminals of each battery cell is more uniform during heating or cooling, so that the temperature control effect is better.

The slender member is made of metal materials with better electrical conductivity and heat conductivity, such as silver, copper, and aluminum. However, comprehensively considering the cost, heat conductivity and electrical conductivity, aluminum is generally selected as the material for the slender member.

The connection between the slender member 1 and the battery cell 21 may be achieved through screw connection, welding, or riveting. However, considering the stability of connection and the effect of heat conduction, this embodiment uses a welding example to fix the slender member 1 and the battery cell 21, and especially uses a laser fusion welding example to further improve the welding efficiency.

The slender member 1 is able to be a rectangular post, a circular post, or a semi-circular post. From the perspectives of material selection for the slender member, convenience of processing, weldability, and convenient mounting of heat transfer pipes, the preferred slender member in this embodiment is a rectangular post.

The clamping part 11 of the slender member 1 may be implemented in the following examples:
Example 1: The clamping part 11 includes a plurality of clamps arranged on the slender member, and the heat transfer pipe is fixed on the slender member through the plurality of clamps.
Example 2: As shown in Fig. 1, the clamping part 11 is a groove 26 formed in the slender member 1, the groove 26 extends along an axial direction of the slender member 1 and penetrates through two ends of the slender member, and the width size of the groove 26 needs to ensure that the heat transfer pipe 3 is closely clamped in the groove 26, so as to ensure the mounting stability while also ensuring the heat transfer effect between the heat transfer pipe 3 and the slender member 1 (in some examples, welding process holes are arranged in the groove to further improve the welding effect).
Example 3: As shown in Fig. 3 and Fig. 4, the clamping part 11 is a first through hole 112 formed in the slender member 1, the first through hole 112 extends along an axial direction of the slender member 1 and penetrates through two ends of the slender member 1, and the hole size of the first through hole 112 needs to ensure that the heat transfer pipe 3 is closely clamped in the first through hole 112, so as to ensure the mounting stability while also ensuring the heat transfer effect between the heat transfer pipe 3 and the slender member 1.

If the example 3 uses laser fusion welding to connect the slender member 1 to the electrode terminal of each battery cell 21, the slender member 1 needs to be provided with a plurality of second through holes 113 communicated with the first through hole 112. During welding, the position below each of the plurality of second through holes 113 corresponds to the positive electrode terminal or negative electrode terminal of a battery cell 21. The formation of the second through hole 113 may provide a transmission channel for laser spots for laser fusion welding, so that the connecting member may be welded and fixed with the positive electrode terminal or negative electrode terminal of each battery cell.

Based on the above description, it can be seen that compared to the example 1, the structural design of the clamping parts 11 in the example 2 and the example 3 has the advantages that the structure is simpler, no additional parts (that is, the clamps in the example 1) are required, and the structures of the clamping parts in the example 2 and the example 3 make the contact surface between the heat transfer pipe 3 and the slender member 1 sufficiently large, resulting in better heat conduction effect. Therefore, the clamping parts in the example 2 and the example 3 are used generally.

Compared to the example 3, if the slender member 1 is longer, the processing accuracy of the groove 26 is easier to ensure compared to the first through hole 112. Moreover, when the heat transfer pipe 3 is made of a metal material such as a copper pipe or a heat pipe, it is easier to ensure that the heat transfer pipe 3 is in close contact with the groove wall of the groove 26 compared to the first through hole 112 (by extruding the copper pipe or heat pipe from the opening of the groove with an external tool to cause deformation). In addition, the groove 26 may provide a transmission channel for laser spots for laser fusion welding. When the first through hole 112 is used, a plurality of second through holes 113 need to be processed as transmission channels for laser spots, and the processing process is relatively complicated. Therefore, from the above aspects, this embodiment selects the example 2 as the clamping part.

Of course, because the example 3 has a larger heat exchange area when using the heat transfer pipe 3 of the same diameter compared to the example 2, in some embodiments, the example 3 may also be selected as the clamping part on the slender member.

The cross section of the groove 26 may be designed into a U shape or C shape. The C-shaped groove has natural tension at an opening, which facilitates the mounting of the heat transfer pipe and is conducive to more closely clamping the heat transfer pipe in the groove, thereby ensuring a better heat conduction effect between the connecting member and the heat transfer pipe. Therefore, in this embodiment, a C-shaped cross section is selected as the cross section of the groove.

### Embodiment 2

As shown in Fig. 2 and Fig. 4, this embodiment provides a high-capacity battery. The high-capacity battery 4 includes a main body of the high-capacity battery, heat transfer pipes 3, and connecting members in Embodiment 1. The main body of the high-capacity battery includes a plurality of battery cells 21 arranged side by side.

Two connecting members are provided, one connecting member is connected to the positive electrode terminals of all battery cells 21 to serve as a positive electrode terminal of the high-capacity battery, and the other connecting member is connected to the negative electrode terminals of all battery cells 21 to serve as a negative electrode terminal of the high-capacity battery.

Two heat transfer pipes 3 are provided, and the two heat transfer pipes 3 are respectively clamped at the clamping parts 11 of the two connecting members and are configured to achieve heat exchange with the electrode terminal of each battery cell, so that an external temperature control apparatus may be used for controlling the temperature of each battery cell.

As shown in Fig. 5, in some embodiments, the high-capacity battery 4 may also be added with an electrolyte sharing function on the basis of Embodiment 2, so that each battery cell is in a same electrolyte system to improve the uniformity of each battery cell, so as to prolong the service life of the high-capacity battery.

The implementation of the electrolyte sharing function generally uses the following two:
1. As shown in Fig. 5, each battery cell 21 is located in a housing 5, and the bottom of the housing 5 is provided with an electrolyte sharing chamber 51. The electrolyte sharing chamber 51 is communicated with an electrolyte region in an inner cavity of each battery cell 21.
2. As shown in Fig. 6, no housing is provided, and the electrolyte regions in the inner cavity of each battery cell 21 are communicated through a slender first hollow member 6. The first hollow member 6 may be made of a pipe or constructed by splicing, and the spliced structure refers to Chinese patent CN218525645U.

In some embodiments, the high-capacity battery 4 may also be added with a gas balance function on the basis of Embodiment 2. Due to the gas balance function, gas regions of each battery cell are communicated to ensure that each battery cell always maintains gas balance during use to improve the gas uniformity of each battery cell, and the gas in each battery cell may be regularly discharged to avoid a series of problems that affect the comprehensive performance of the high-capacity battery, such as swelling of a case of the battery cell caused by the inability to discharge gas.

The implementation of gas balance generally uses the following two:
1. As shown in Fig. 7, each battery cell 21 is located in a housing 5, the top of the housing 5 is provided with a gas chamber 52, and the gas chamber 52 is communicated with a gas region in an inner cavity of each battery cell 21.
2. As shown in Fig. 8, no housing is provided, and the gas regions in the inner cavity of each battery cell 21 are communicated through a slender second hollow member 7. The second hollow member 7 may be made of a pipe or constructed by splicing, and the spliced structure refers to Chinese patent CN218525645U.

In some embodiments, the high-capacity battery 4 may also be added with an explosion venting function on the basis of Embodiment 2. The explosion venting function requires an explosion venting component, and the explosion venting component covers an explosion venting port of each battery cell (an explosion venting film is designed at the explosion venting port). When a battery cell experiences thermal runaway, the thermal runaway flue gas breaks through the explosion venting film and then is discharged from an explosion venting pipe to ensure that the battery cell experiencing thermal runaway may quickly vent explosions, thereby avoiding the impact on other battery cells.

The implementation of the explosion venting function generally uses the following two:
1. As shown in Fig. 7, each battery cell 21 is located in a housing 5, the top of the housing is provided with a gas chamber 52, and the gas chamber 52 covers an explosion venting port on each battery cell 21.
2. As shown in Fig. 8, no housing 5 is provided, and a slender second hollow member 7 covers the explosion venting port on each battery cell 21. The second hollow member 7 may be made of a pipe or constructed by splicing, and the spliced structure refers to Chinese patent CN218525645U.

In some embodiments, as shown in Fig. 9 and Fig. 10, the high-capacity battery may also be added with both an electrolyte sharing function and a gas balance function, or added with both an electrolyte sharing function and an explosion venting function on the basis of Embodiment 2.

### Embodiment 3

As shown in Fig. 12, this embodiment provides an energy storage device, including two high-capacity batteries 4 as described in Embodiment 2 and an electrical connector 8. In practical present inventions, the number of high-capacity batteries and the number of electrical connectors may be selected according to needs.

Two high-capacity batteries 4 are arranged side by side. Two adjacent high-capacity batteries 4 are connected in series through an electrical connector 8. A part of the electrical connector 8 is connected to the connecting member serving as a positive electrode terminal in a high-capacity battery, and the other part of the electrical connector 8 is connected to the connecting member serving as a negative electrode terminal in another high-capacity battery (see Fig. 11).

The practical function of the electrical connector is to connect two high-capacity batteries in series. Therefore, the electrical connector has multiple structural forms for example:
I. The electrical connector 8 may be at least one cable, and each cable is electrically connected to a connecting member through a wiring terminal. In this example, the connection between the wiring terminal and the connecting member is relatively complex.
II. As shown in Fig. 11, the electrical connector 8 includes at least one metal aluminum plate 81, and the metal aluminum plate 81 is integrated with two connecting members that are close to each other in two adjacent high-capacity batteries 4. As shown in Fig. 12, in this example, two heat transfer members and the electrical connector 8 are made into an integrated structure, so that the integration degree is high, and assembly processes may be reduced. However, it is relatively difficult to process the integrated member made of the two heat transfer members and the electrical connector.
III. The electrical connector 8 includes at least one metal aluminum plate 81, and the metal aluminum plate 81 is connected to the connecting member by means of screw connection. In this example, the processing of the electrical connector is relatively easy. During assembly, only metal aluminum plates need to be fixed at two ends and the middle position of the connecting member by means of screw connection.

In order to make the heat transfer pipe more closely attached to the slender member and more conducive to heat exchange, the size of the metal aluminum plate in an arrangement direction of two high-capacity batteries in the example 3 may be extended, so as to enable the metal aluminum plate 81 to cover the heat transfer pipe 3 arranged in the groove 26, and the downward pressure of screw connection is configured to apply a force to the heat transfer pipe 3, so as to make the heat transfer pipe 3 more closely attached to the slender member 1. Therefore, in this embodiment, the example 3 is preferred as the structure of the electrical connector.

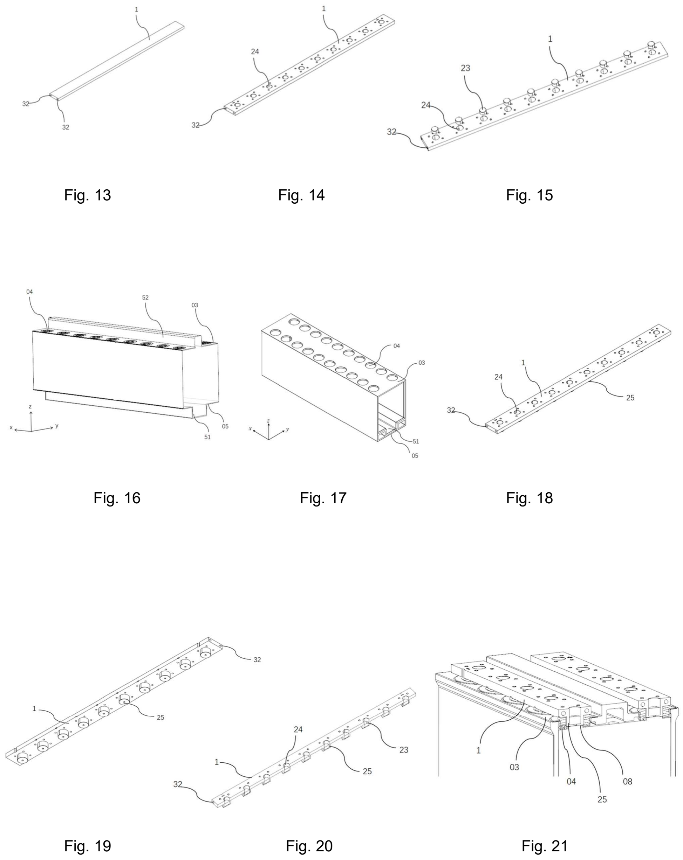

Embodiment 4 to Embodiment 10 provide connecting members different from those in the above embodiments, and high-capacity batteries and energy storage devices with such connecting members. The following will provide a detailed description with reference to Fig. 13 to Fig. 24. Embodiment 4
This embodiment provides a connecting member having a structure shown in Fig. 13, including a slender member 1 configured to be connected to positive electrode terminals or negative electrode terminals of a plurality of battery cells in a high-capacity battery. The slender member 1 is provided with a heat exchange channel 32. The heat exchange channel 32 is configured to transmit a heat transfer medium. The connecting member on the high-capacity battery may achieve electrical connection between battery cells, and because the heat exchange channel 32 is arranged on the connecting member, the heat concentrated on the battery cell electrode terminal may be transferred from the connecting member to the heat transfer medium in the heat exchange channel 32 and then carried away. Similarly, when the ambient temperature is too low and battery cells may not be started normally, each battery cell may also be heated through the heat transfer medium and the connecting member.

In addition, the connecting member is a slender member 1, and when the battery cell electrode terminals of each battery cell are connected through the slender member 1, the temperature distribution of the battery cell electrode terminals of each battery cell is more uniform during heating or cooling, so that the temperature control effect is better.

It can be seen from the figure that the heat exchange channel 32 in this embodiment extends along an axial direction of the slender member 1. In other embodiments, the heat exchange channel 32 may have a serpentine, S-shaped, or other curved form, but compared to this embodiment, the processing difficulty is relatively high.

The slender member 1 is made of metal materials with better electrical conductivity and heat conductivity, such as silver, copper, and aluminum. However, comprehensively considering the cost, heat conductivity and electrical conductivity, aluminum is generally selected as the material for the slender member 1. Due to the direct connection between the connecting member and the battery cell electrode terminal, in order to ensure that the heat transfer medium circulating in the heat exchange channel 32 is not charged, an electrically insulated heat transfer medium, such as insulated oil or fluorinated liquid, may be used. Considering that the fluorinated liquid has a higher heat conduction coefficient (usually between 0.15 W/(m·K) and 0.4 W/(m·K)), the fluorinated liquid is preferred in this embodiment.

The connection between the slender member 1 and the battery cell may be achieved through screw connection (the slender member 1 is provided with screw holes), welding, or riveting. However, considering the stability of connection and the effect of heat conduction, this embodiment preferably uses a welding example to fix the slender member 1 and the battery cell, and especially uses a laser fusion welding example to further improve the welding efficiency.

### Embodiment 5

This embodiment provides a connecting member. Different from Embodiment 4, on the basis of Embodiment 4, the slender member 1 is uniformly provided with a plurality of blind holes 24, and the bottom of each of the plurality of blind holes 24 is configured to be connected to the positive electrode terminal or negative electrode terminal of a battery cell.

As shown in Fig. 14, in order to facilitate the connection between a connecting member and a battery electrode terminal 08 of a battery cell, in this embodiment, the slender member 1 is uniformly provided with a plurality of first holes which are blind holes 24, and the bottom of each of the plurality of blind holes 24 and the battery electrode terminal 08 of the battery cell may be connected by fusion welding or may be connected by means of screw connection. Compared to the screw connection, the welding connection has higher reliability, so that the welding connection is selected in this embodiment. In order to eliminate the welding stress, the bottom of the blind hole 24 may be provided with a through hole communicated with the blind hole 24. It can also be understood that the structure of the first hole is a stepped hole, a large hole of the stepped hole is close to an upper end surface of the slender member 1, and a small hole of the stepped hole is close to a lower end surface of the slender member 1.

It should be noted that the plurality of blind holes 24 is separated from the heat exchange channel 32.

In this embodiment, threaded holes may be formed in the connecting member to facilitate the connection between the connecting member and the electrical connector.

Considering that the electrical conductivity of a hollow conductor is weaker than that of a solid conductor due to different flow cross sections, when the connecting member is connected to the battery cell electrode terminal, a conductive post 23 may also be fixed in the first hole in this embodiment to improve the electrical conductivity of the connecting member, as shown in Fig. 15.

The first hole may be a circular hole, a square hole, or another anisotropic hole. In order to adapt to the shape of the battery cell electrode terminal, a circular hole is preferred in this embodiment. The shape of the conductive post 23 is matched with the first hole and is cylindrical, the outer diameter of the conductive post 23 may be slightly larger than the diameter of the first hole, and the conductive post 23 is connected to the first hole by means of interference fit. In order to facilitate the fixation of the conductive post 23 in the first hole, a chamfer may be set on an end surface of the conductive post 23. The height of the conductive post 23 may be the same as the hole depth of the first hole or slightly smaller than the hole depth of the first hole. This embodiment does not limit the height of the conductive post 23. The material of the conductive post 23 is the same as the material of the slender member 1.

### Embodiment 6

Different from the above embodiments, in this embodiment, an electrical connection post 25 is additionally provided on the basis of above Embodiment 4 or Embodiment 5. The main purpose of connecting the electrical connection post 25 to the battery cell electrode terminal is to overcome complex technical problems in the assembly process of high-capacity batteries with the following structural forms:
This type of high-capacity battery includes a housing and a plurality of battery cells. The plurality of battery cells are arranged in parallel in the housing. The housing is composed of a cylinder and end plates fixed at two ends of the cylinder. The structure of the cylinder may refer to Fig. 16 and Fig. 17. A top plate 03 of the cylinder is provided with electrode terminal avoiding holes 04 corresponding to the electrode terminal of each battery cell.

A bottom plate 05 of the cylinder has a convex part in a direction away from the top plate to form a first channel as an electrolyte sharing chamber 51. The electrolyte sharing chamber 51 is communicated with an electrolyte region in an inner cavity of each battery cell. By the electrolyte sharing chamber 51, each battery cell may be located in a unified electrolyte environment, thereby ensuring the uniformity of the electrolyte in each battery cell, and improving the performance and cycle life of the high-capacity battery.

The top plate 03 of the cylinder may also be provided with a convex part in a direction away from the bottom plate to form a second channel as a gas chamber 52. The gas chamber 52 covers a gas port at the top of each battery cell in the high-capacity battery. It should be noted that the gas port here has the following two meanings:
(1) The gas port is an electrode terminal avoiding hole directly formed in an upper cover plate of a battery cell and communicated with an inner cavity of the battery cell.

In this case, the inner cavity of the gas chamber 52 is communicated with the gas region of the inner cavity of each battery cell through the gas port, and the gas chamber 52 is used as a gas sharing chamber of each battery cell. Based on the gas chamber 52, the gas regions of each battery cell may be communicated to achieve gas balance for sharing gas in each battery cell, so as to ensure the consistency of each battery cell, thereby improving the cycle life of the high-capacity battery to a certain extent. When any battery cell experiences thermal runaway, the flue gas in the inner cavity of the battery cell enters the gas chamber 52 and is discharged through the gas chamber 52, thereby improving the safety of the high-capacity battery.

(2) The gas port is an explosion venting port or explosion-proof port formed in the upper cover plate of the battery cell, and the explosion venting port or explosion-proof port is provided with an explosion venting film.

In this case, the gas chamber 52 is used as an explosion venting channel. When the explosion venting film at the gas port of any battery cell is broken through by the flue gas in the inner cavity, the flue gas in the inner cavity of the battery cell is discharged through the gas chamber 52, thereby improving the safety of the high-capacity battery.

The above high-capacity battery is able to be prepared through the following process:
Step 1: A cylinder and end plates at two ends of the cylinder are processed.
Step 2: Capacity division and sorting are performed to select a plurality of battery cells meeting requirements. A first electrode terminal avoiding hole is formed in the bottom of a case of the battery cell and then is sealed with a sealing assembly (when a top plate 03 of the cylinder is provided with a gas chamber 52 and the gas chamber 52 is used as a gas sharing chamber, a fifth electrode terminal avoiding hole needs to be formed in the top of the case of the battery cell and then is sealed with a sealing assembly). A plurality of battery cells with sealing assemblies are arranged in the cylinder in step 1. The first electrode terminal avoiding hole with the sealing assembly corresponds to the electrolyte sharing chamber 51 (when the top plate 03 of the cylinder is provided with the gas chamber 52 and the gas chamber 52 is used as the gas sharing chamber, the fifth electrode terminal avoiding hole with the sealing assembly needs to correspond to the gas sharing chamber; when the top plate 03 of the cylinder is provided with the gas chamber 52 and the gas chamber 52 is used as an explosion venting channel, an explosion venting part at the top of each battery cell needs to correspond to the explosion venting channel to ensure that when the explosion venting part is broken through by the flue gas in the inner cavity, the explosion venting part is communicated with the explosion venting channel), thereby ensuring that when the sealing assembly is opened with an external force or an electrolyte, the first electrode terminal avoiding hole is communicated with the electrolyte sharing chamber 51 (the fifth electrode terminal avoiding hole is communicated with the gas sharing chamber). Sealing assemblies disclosed in Chinese patents CN218525645U and CN218525614U may be used. The electrode terminal of each battery cell extends out of the electrode terminal avoiding hole 04 corresponding to the top plate 03 of the cylinder, and the electrode terminal avoiding hole 04 is welded to the peripheral part of the battery cell electrode terminal of the case of the battery cell to achieve sealing. In order to ensure that the battery cell electrode terminal 08 of each battery cell may extend out of the electrode terminal avoiding hole 04 at the top of the cylinder, in a mounting process, support ribs need to be additionally arranged between the bottom of each battery cell and the bottom plate 05 of the cylinder.

During mounting, a plurality of battery cells with sealing assemblies may be arranged in the cylinder in the following examples:

### (1) Strip-shaped equal-height support ribs are selected.

A plurality of battery cells are fixed into a whole and pushed into the inner cavity of the cylinder from any open end of the cylinder. In this case, the bottom of each battery cell is in contact with the bottom plate 05 of the cylinder, and the battery cell electrode terminal of each battery cell corresponds to the corresponding electrode terminal avoiding hole 04, but does not extend out of the electrode terminal avoiding hole 04. Then, the plurality of battery cells are supported from the bottom by a lifting tool to ensure that the bottom of each battery cell is detached from the bottom plate 05 of the cylinder, and the battery cell electrode terminal of each battery cell extends out of the corresponding electrode terminal avoiding hole 04. Then, strip-shaped equal-height support ribs are inserted along an x direction, and then, the lifting tool is taken out.

It should be noted that in a z direction, the sizes of the strip-shaped equal-height support ribs need to ensure that when support ribs are additionally arranged between the bottom of each battery cell and the bottom plate 05 of the cylinder, the battery cell electrode terminal of each battery cell extends out of the corresponding electrode terminal avoiding hole 04.

### (2) A plurality of cushion blocks in one-to-one correspondence to battery cells are selected to form support ribs.

A plurality of battery cells are sequentially pushed into the inner cavity of the cylinder from any open end of the cylinder. When each battery cell is pushed in place, each cushion block needs to be inserted between the bottom of each battery cell and the bottom plate 05 of the cylinder to ensure that the battery cell electrode terminal of the battery cell completely extends out of the corresponding electrode terminal avoiding hole 04. In most cases, in this example, the sizes of the cushion blocks corresponding to each battery cell in the z direction are different.

Step 3: End plates are welded at two opposite open ends of the cylinder.

Step 4: The sealing assembly is opened with an external force or an electrolyte, and the inner cavity of the electrolyte sharing chamber 51 is communicated with the electrolyte region in the inner cavity of each battery cell (when the top plate 03 of the cylinder is provided with the gas chamber 52 and the gas chamber 52 is used as the gas sharing chamber, the inner cavity of the gas sharing chamber is communicated with the gas region in the inner cavity of each battery cell).

In the above method, in order to enable the battery cell electrode terminal of each battery cell to extend out of the corresponding electrode terminal avoiding hole 04, support ribs must be additionally arranged in the mounting process, so that the preparation process is relatively complex.

In this embodiment, when the connecting member is additionally provided with the electrical connection post 25, the battery cell electrode terminal does not need to extend out of the corresponding electrode terminal avoiding hole 04, but the electrical connection post 25 of the connecting member extends into the electrode terminal avoiding hole 04 and is connected to the battery cell electrode terminal located in the inner cavity of the cylinder. Therefore, during assembly, support ribs do not need to be additionally arranged between the bottom of the battery cell and the bottom plate 05 of the cylinder, thereby simplifying the preparation process of such high-capacity batteries.

The specific structure of the electrical connection post 25 is shown in Fig. 18 to Fig. 20 (taking an example in which the electrical connection post 25 is additionally arranged on the basis of Embodiment 5). In this embodiment, the electrical connection post 25 is a cylinder fixed at the bottom of the slender member 1. In order to facilitate the connection between the connecting member with such electrical connection posts 25 and the battery cell electrode terminal 08, the blind hole 24 extends to the electrical connection post 25. As shown in Fig. 21, in this embodiment, in step 2, each battery cell is pushed into the cylinder, the electrode terminal avoiding hole 04 is welded to the peripheral part of the battery cell electrode terminal 08 of the case of the battery cell to achieve sealing, and the electrical connection post 25 of the connecting member extends into the electrode terminal avoiding hole 04 and is connected to the battery cell electrode terminal 08.

### Embodiment 7

Different from Embodiment 4, Embodiment 5, and Embodiment 6, in this embodiment, the connecting member in the above embodiments is provided with a clamping part for mounting a heat transfer pipe.

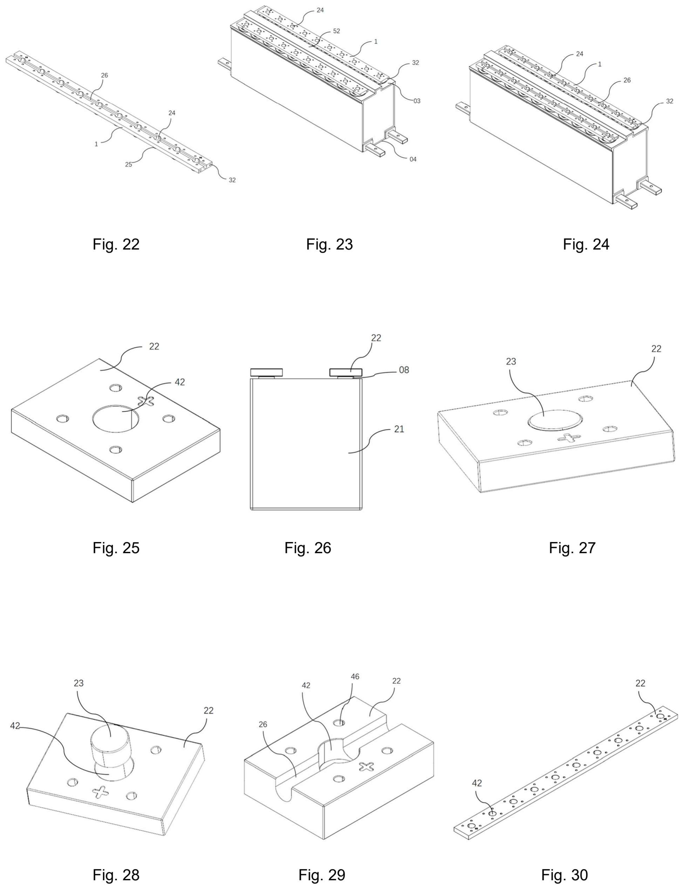

An example of providing a clamping part for mounting a heat transfer pipe on the connecting member in Embodiment 6 is taken for explanation, as shown in Fig. 22.

When a high-capacity battery is constructed by battery cells with such connecting members, a heat transfer pipe is mounted at the clamping part of the connecting member, and the heat concentrated on the battery cell electrode terminal 08 may also be transferred from the connecting member to the heat transfer pipe and then carried away. Similarly, when the ambient temperature is too low and battery cells may not be started normally, an external temperature control apparatus may also heat each battery cell through the heat transfer pipe.

The clamping part may be a through hole or groove 26 formed in the slender member 1, and the through hole or groove 26 extends along an x direction and penetrates through two ends of the slender member 1. The size of the through hole or groove 26 needs to ensure that the heat transfer pipe is closely clamped in the through hole or groove 26, so as to ensure the mounting stability while also ensuring the heat transfer effect between the heat transfer pipe and the connecting member. Compared to the through hole, if there are a large number of battery cells in groups, the heat transfer pipe is more easily fixed in the groove 26. Moreover, when the heat transfer pipe is made of a metal material such as a copper pipe or a heat pipe, it is easier to ensure that the heat transfer pipe is in close contact with the groove wall of the groove 26 compared to the through hole (by extruding the copper pipe or heat pipe from the opening of the groove 26 with an external tool to cause deformation). The cross section of the groove 26 may be designed into a U shape or C shape.

When the groove 26 is communicated with the plurality of blind holes 24, the conductive post 23 in the blind hole 24 also has the function of improving the heat conduction effect, so that the battery cell electrode terminal 08 and the heat transfer pipe may better achieve heat exchange.

It should be noted that the groove 26 is separated from the heat exchange channel 32.

### Embodiment 8

This embodiment provides a high-capacity battery, including a plurality of battery cells and two connecting members in the above embodiments. The plurality of battery cells are arranged side by side. One connecting member is connected to the positive electrode terminals of all battery cells, and the other connecting member is connected to the negative electrode terminals of all battery cells.

In an embodiment, the connecting member in Embodiment 7 is used, a heat transfer pipe is mounted in the groove 26. By mounting the heat transfer pipe in the groove 26, the heat concentrated on the battery cell electrode terminal 08 may be transferred from the connecting member to the heat transfer pipe and then carried away to an external temperature control apparatus for processing. Similarly, when the ambient temperature is too low and battery cells may not be started normally, the external temperature control apparatus may also heat each battery cell through the heat transfer pipe and the connecting member. In addition, the connecting member is a slender member 1, and when the battery cell electrode terminals 08 of each battery cell are connected through the slender member 1, the temperature distribution of the battery cell electrode terminals 08 of each battery cell is more uniform during heating or cooling, so that the temperature control effect is better.

### Embodiment 9

This embodiment provides a high-capacity battery with a structure shown in Fig. 23 and Fig. 24. Different from Embodiment 8, the high-capacity battery further includes a housing, and a plurality of battery cells are arranged side by side in the housing. A top plate of the housing (a top plate 03 of a cylinder) is provided with electrode terminal avoiding holes 04 corresponding to the electrode terminal 08 of each battery cell, and a region of the housing corresponding to the electrode terminal avoiding hole 04 and a case of the battery cell are fixedly sealed. Similar to Embodiment 5, the high-capacity battery also includes two connecting members in the above embodiments, one connecting member is connected to the positive electrode terminals of all battery cells, and the other connecting member is connected to the negative electrode terminals of all battery cells.

In an embodiment, support ribs are additionally arranged between the bottom of each battery cell and the bottom plate 05 of the cylinder and then the electrode terminal 08 of each battery cell extends out of the top plate of the housing and corresponds to the electrode terminal avoiding hole 04, a connecting member which is not provided with electrical connection posts 25 may be used.

In another embodiment, no support ribs are arranged between the bottom of each battery cell and the bottom plate 05 of the cylinder and then each battery cell may not extend out of the top plate of the housing and may not correspond to the electrode terminal avoiding hole 04, a connecting member which is provided with electrical connection posts 25 may be used, and each electrical connection post 25 on the connecting member extends into the electrode terminal avoiding hole 04 and is connected to the corresponding battery cell electrode terminal 08.

### Embodiment 10

This embodiment provides an energy storage device, including two high-capacity batteries as described in Embodiment 8 or Embodiment 9 and an electrical connector. In practical present inventions, the number of high-capacity batteries and the number of electrical connectors may be selected according to needs.

The two high-capacity batteries are arranged side by side. Two adjacent high-capacity batteries are connected in series through the electrical connector. One side of the electrical connector is connected to the connecting member serving as a positive electrode terminal in a high-capacity battery, and the other side of the electrical connector is connected to the connecting member serving as a negative electrode terminal in another high-capacity battery.

Embodiment 11 to Embodiment 18 provide connecting members different from those in the above embodiments, and battery cells, high-capacity batteries and energy storage devices with such connecting members. The following will provide a detailed description with reference to Fig. 25 to Fig. 39.

### Embodiment 11

This embodiment provides a connecting member configured to be connected to a battery cell electrode terminal 08 (including a positive electrode terminal and a negative electrode terminal). The problem of excessively high local heat of the battery cell electrode terminal 08 may be improved through the connecting member.

The connecting member connected to the positive electrode terminal or the negative electrode terminal has the same structure. This embodiment takes the connecting member connected to the positive electrode terminal as an example, and the structure of the connecting member is shown in Fig. 25.

It can be seen from the figure that a main body 22 of the connecting member in this embodiment is a rectangular block. In some other embodiments, the main body 22 of the connecting member may also be a cylinder. The main body 22 of the connecting member may be made of metal materials with better electrical conductivity and heat conductivity, such as silver, copper, and aluminum. However, comprehensively considering the cost and electrical conduction and heat conduction effects, aluminum is generally selected as the material for the main body of the connecting member.

In order to connect the main body of the connecting member to the battery cell electrode terminal 08, in this embodiment, the main body 22 of the connecting member is provided with a first hole 42. The first hole 42 may be a through hole or a blind hole. When the first hole 42 is a through hole, the first hole 42 may be a threaded through hole and is connected to the battery cell electrode terminal 08 by means of screw connection. When the first hole 42 is a blind hole, the bottom of the blind hole may be connected to the battery cell electrode terminal 08 by fusion welding or may be connected to the battery cell electrode terminal 08 by means of screw connection. Compared to the screw connection, the welding connection has higher reliability, so that in this embodiment, the first hole 42 is preferably a blind hole, and the welding connection is selected. In order to eliminate the welding stress, the bottom of the blind hole may be provided with a through hole communicated with the blind hole. It can also be understood that the structure of the first hole 42 is a stepped hole, a large hole of the stepped hole is close to an upper end surface of the main body 22 of the connecting member, and a small hole of the stepped hole is close to a lower end surface of the main body 22 of the connecting member.

In order to obtain a better heat dissipation effect, the volume of the main body 22 of the connecting member may be increased as much as possible to increase the heat dissipation area thereof. As shown in Fig. 26, in this embodiment, the projection of the main body 22 of the connecting member on the upper cover plate of the battery cell 21 completely covers the projection of the corresponding electrode terminal on the upper cover plate of the battery cell 21.

It should be noted that the volume of the main body 22 of the connecting member should not be too large to avoid an increase in the distance between adjacent battery cells 21 when grouping, resulting in an increase in the volume of the entire high-capacity battery, and thus the capacity density of energy storage devices constructed by such high-capacity batteries is relatively low.

Considering that the electrical conductivity of a hollow conductor is weaker than that of a solid conductor due to different flow cross sections, when the main body 22 of the connecting member is connected to the electrode terminal, a conductive post 23 is fixed in the first hole 42 in this embodiment to improve the electrical conductivity of the connecting member, as shown in Fig. 27 and Fig. 28.

The first hole 42 may be a circular hole, a square hole, or another anisotropic hole. In order to adapt to the shape of the electrode terminal, a circular hole is preferred in this embodiment. The shape of the conductive post 23 is matched with the first hole 42 and is cylindrical, the outer diameter of the conductive post 23 may be slightly larger than the diameter of the first hole 42, and the conductive post 23 is connected to the first hole 42 by means of interference fit. In order to facilitate the fixation of the conductive post 23 in the first hole 42, a chamfer may be set on an end surface of the conductive post 23. The height of the conductive post 23 may be the same as the hole depth of the first hole 42 or slightly smaller than the hole depth of the first hole 42. This embodiment does not limit the height of the conductive post 23. The material of the conductive post 23 is the same as the material of the main body 22 of the connecting member.

In this embodiment, threaded holes 46 may also be formed in the main body 22 of the connecting member. During construction of an energy storage device, the electrical connector and the connecting member may be connected through screws. In order to improve the reliability of connection, four threaded holes 46 are uniformly distributed in regions of the main body 22 of the connecting member around the plurality of blind holes.

### Embodiment 12

As shown in Fig. 29, different from the above embodiments, in this embodiment, the main body 22 of the connecting member in Embodiment 11 is provided with a clamping part for mounting a heat transfer pipe 3. When a high-capacity battery is constructed by battery cells 21 with such connecting members, a heat transfer pipe 3 is mounted at the clamping part of the connecting member, and the heat concentrated on the electrode terminal may also be transferred from the connecting member to the heat transfer pipe 3 and then carried away. Similarly, when the ambient temperature is too low and battery cells 21 may not be started normally, an external temperature control apparatus may also heat each battery cell 21 through the heat transfer pipe 3.

The clamping part may be a through hole or groove 26 formed in the main body 22 of the connecting member. The size of the through hole or groove 26 needs to ensure that the heat transfer pipe 3 is closely clamped in the through hole or groove 26, so as to ensure the mounting stability while also ensuring the heat transfer effect between the heat transfer pipe 3 and the connecting member. Compared to the through hole, if there are a large number of battery cells 21 in groups, the heat transfer pipe 3 is more easily fixed in the groove 26. Moreover, when the heat transfer pipe 3 is made of a metal material such as a copper pipe or a heat pipe, it is easier to ensure that the heat transfer pipe 3 is in close contact with the groove wall of the groove 26 compared to the through hole (by extruding the copper pipe or heat pipe from the opening of the groove 26 with an external tool to cause deformation). The cross section of the groove 26 may be designed into a U shape or C shape.

When the groove 26 is communicated with the first hole 42, the conductive post 23 in the first hole 42 also has the function of improving the heat conduction effect, so that the electrode terminal and the heat transfer pipe 3 may better achieve heat exchange.

### Embodiment 13

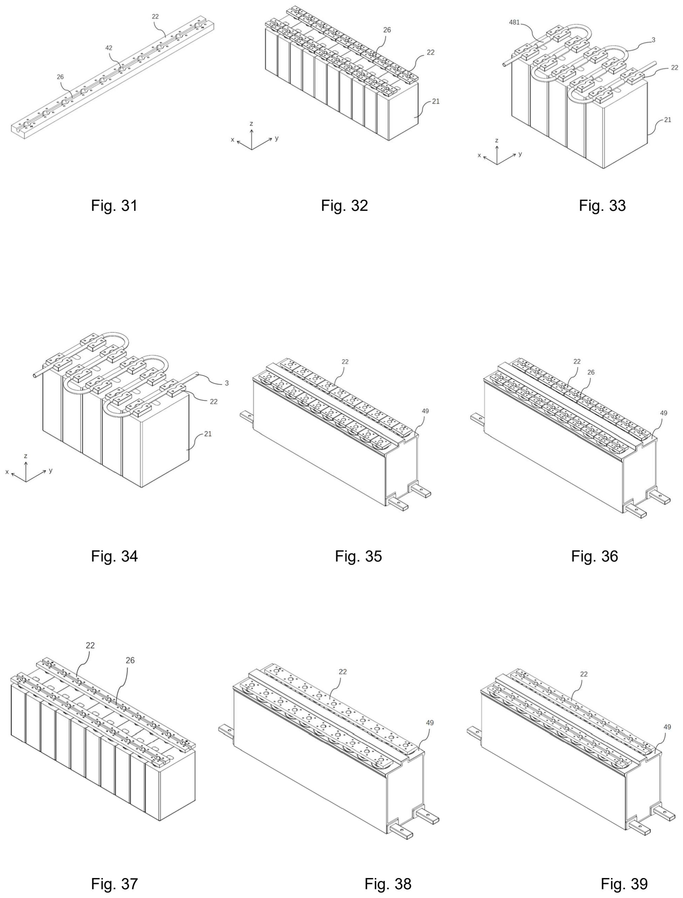

As shown in Fig. 30 and Fig. 31, different from the above embodiments, the connecting member in this embodiment is a slender rectangular block, the rectangular block is provided with a plurality of blind holes, and the bottom of each of the plurality of blind holes is configured to be connected to a battery cell electrode terminal 08. The material of the connecting member is aluminum, which has better electrical conduction and heat conduction effects. The bottom of each of the plurality of blind holes is connected to the battery cell electrode terminal 08 by fusion welding. In order to eliminate the welding stress, the bottom of the plurality of blind holes may be provided with a through hole communicated with the plurality of blind holes. Similarly, considering that the electrical conductivity of a hollow conductor is weaker than that of a solid conductor due to different flow cross sections, when the main body 22 of the connecting member is connected to the electrode terminal, a conductive post 23 is arranged in each of the plurality of blind holes, and an outer wall of the conductive post 23 is in close contact with an inner wall of the plurality of blind holes.

Fig. 30 is a schematic structural view of a connecting member in this embodiment. It can be understood that the slender connecting member is composed of a plurality of connecting members in Embodiment 11 arranged along a same direction and sequentially connected into a whole.

Fig. 31 shows a connecting member provided with a groove 26 on the basis of the structure shown in Fig. 30. It may be understood that the slender connecting member is composed of a plurality of connecting members in Embodiment 12 arranged along a same direction and sequentially connected into a whole.

When the battery cells 21 are grouped, the connecting member on the high-capacity battery may not only dissipate heat, but also achieve electrical connection between the battery cells 21. In addition, when an energy storage device is constructed by such high-capacity batteries, two sides of the electrical connector may be respectively connected to the connecting member on the positive electrode terminal and the connecting member on the negative electrode terminal of adjacent high-capacity batteries, so as to achieve series connection between the two high-capacity batteries.

The connecting member in Fig. 31 is provided with a clamping part for mounting a heat transfer pipe 3. When grouping, the heat transfer pipe 3 is mounted at the clamping part for mounting a heat transfer pipe 3, and the heat concentrated on the electrode terminal may also be transferred from the connecting member to the heat transfer pipe 3 and then carried away to an external temperature control apparatus for processing. Similarly, when the ambient temperature is too low and battery cells 21 may not be started normally, an external temperature control apparatus may also heat each battery cell 21 through the heat transfer pipe 3 and the connecting member. In addition, the connecting member is a slender member, and when the electrode terminals 08 of each battery cell are connected through the slender member, the temperature distribution of the electrode terminals 08 of each battery cell is more uniform during heating or cooling, so that the temperature control effect is better.

### Embodiment 14

This embodiment provides a battery cell 21 having a structure shown in Fig. 26. The positive electrode terminal and negative electrode terminal of the battery cell 21 are both connected with connecting members in Embodiment 11 or 12. The specific structure of the connecting member and the example of connection between the connecting member and the electrode terminal have been described in the above embodiments, and will not be repeated here.

### Embodiment 15

This embodiment provides a high-capacity battery, including a plurality of battery cells 21 in Embodiment 14, having a structure shown in Fig. 32, Fig. 33 and Fig. 34.

In Fig. 32, the groove 26 of each connecting member extends along an x direction, and the heat transfer pipe 3 may be fixed in the groove 26 of each connecting member located on the same side to achieve heat exchange. When the heat transfer pipe is a metal member, parallel connection between battery cells may also be achieved.

In Fig. 33, the groove 26 of each connecting member extends along a y direction, and the heat transfer pipes 3 are able to be arranged in a serpentine example to connect all connecting members in series. It should be noted that a part of the heat transfer pipe 3 connected between the positive and negative electrode terminals of the same battery cell 21 needs to be insulated. This part may use an insulated joint 481 or insulated pipe section, and the remaining part of the heat transfer pipe 3 may use an aluminum pipe, so as to improve the heat exchange efficiency. Moreover, series connection between a plurality of battery cells 21 may also be achieved.

In Fig. 34, different from the structure in Fig. 33, the entire heat transfer pipe 3 uses an insulated pipe section, and preferably uses an insulated pipe section with better heat conductivity and electrical conductivity. Compared to Fig. 33, this heat transfer pipe 3 has better sealing performance.

### Embodiment 16

This embodiment provides a high-capacity battery. Different from Embodiment 15, the high-capacity battery further includes a housing. A top plate 49 of the housing is provided with through holes capable of enabling the electrode terminal 08 of each battery cell to extend out, a plurality of battery cells 21 are arranged side by side in the housing, and the electrode terminal extends out of the corresponding through hole. A region of the housing corresponding to the through hole and a case of the battery cell 21 are fixedly sealed. The structure of the high-capacity battery is shown in Fig. 35 and Fig. 36.

### Embodiment 17

This embodiment provides a high-capacity battery. Different from Embodiment 15 and Embodiment 16, the electrode terminal 08 of each battery cell is connected with the connecting member as described in Embodiment 13. As shown in Fig. 37, Fig. 38 and Fig. 39, the high-capacity battery includes two connecting members, wherein one connecting member is connected to the positive electrode terminals of all battery cells 21, and the other connecting member is connected to the negative electrode terminals of all battery cells 21. By mounting the heat transfer pipe 3 in the groove 26, the heat concentrated on the electrode terminal may be transferred from the connecting member to the heat transfer pipe 3 and then carried away to an external temperature control apparatus for processing. Similarly, when the ambient temperature is too low and battery cells 21 may not be started normally, an external temperature control apparatus may also heat each battery cell 21 through the heat transfer pipe 3 and the connecting member. In addition, the connecting member is a slender member, and when the electrode terminals 08 of each battery cell are connected through the slender member, the temperature distribution of the electrode terminals 08 of each battery cell is more uniform during heating or cooling, so that the temperature control effect is better.

### Embodiment 18

This embodiment provides an energy storage device, including two high-capacity batteries as described in Embodiment 15, Embodiment 16 or Embodiment 17, and an electrical connector. In practical applications, the number of high-capacity batteries and the number of electrical connectors may be selected according to needs.

The two high-capacity batteries are arranged side by side. Two adjacent high-capacity batteries are connected in series through the electrical connector. One side of the electrical connector is connected to the connecting member on a positive electrode terminal in a high-capacity battery, and the other side of the electrical connector is connected to the connecting member on a negative electrode terminal in another high-capacity battery.

Embodiment 19 to Embodiment 24 provide connecting members, high-capacity batteries, and energy storage devices different from those in the above embodiments. The following will provide a detailed description with reference to the accompanying drawings.

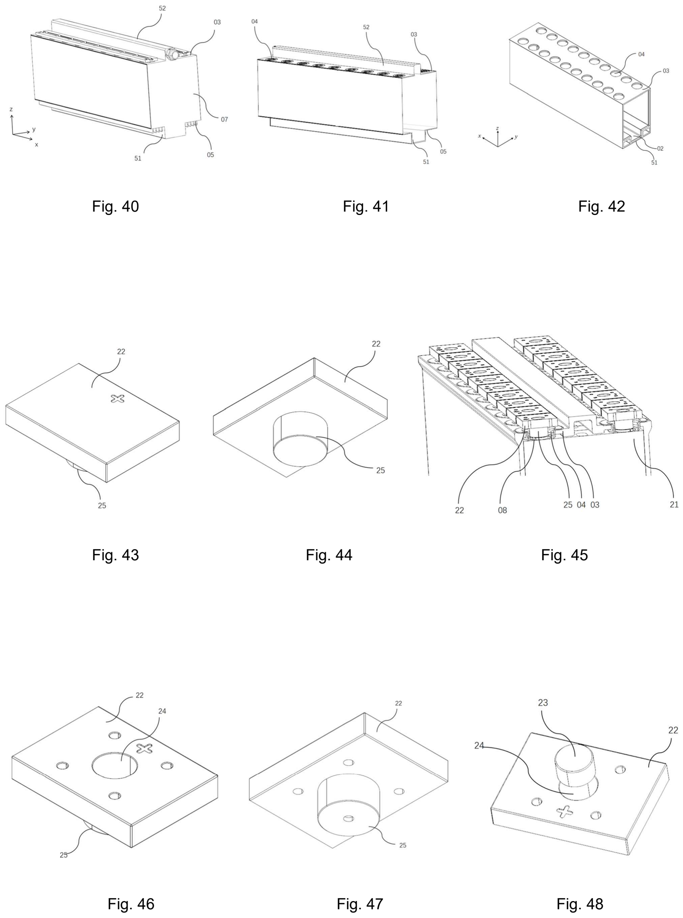

A related art provides a high-capacity battery. As shown in Fig. 40, the high-capacity battery includes a housing and a plurality of battery cells 21. The housing is enclosed by a cylinder and two end plates 07, the plurality of battery cells 21 are arranged in parallel in the cylinder, and a top plate 03 of the cylinder is provided with electrode terminal avoiding holes 04 for the electrode terminal 08 of each battery cell to extend out of the housing corresponding to the electrode terminal 08 of each battery cell. The electrode terminal 08 of each battery cell extends out of the electrode terminal avoiding hole 04, and a region of the housing corresponding to the electrode terminal avoiding hole 04 and a case of the battery cell 21 are fixedly sealed. The cylinder may also use the structure shown in Fig. 41 and Fig. 42.

A bottom plate 05 of the cylinder is provided with an electrolyte sharing chamber 51, and the electrolyte sharing chamber 51 is communicated with an electrolyte region in an inner cavity of each battery cell 21. By the electrolyte sharing chamber 51, each battery cell 21 may be located in a unified electrolyte environment, thereby ensuring the uniformity of the electrolyte in each battery cell 21, and improving the performance and cycle life of the high-capacity battery.

The top plate 03 of the cylinder may also be provided with a gas chamber 52, and the gas chamber 52 may be communicated with a gas region in the inner cavity of each battery cell 21 to achieve gas balance of each battery cell 21, thereby further improving the performance and cycle life of the high-capacity battery. The gas chamber 52 may also be used as an explosion venting channel. When any battery cell 21 experiences thermal runaway, the thermal runaway flue gas in the inner cavity of the battery cell 21 enters the gas chamber 52 and breaks through an explosion venting mechanism arranged at any end of the gas chamber 52 and then is discharged.

In order to ensure that the electrode terminal 08 of each battery cell may extend out of the electrode terminal avoiding hole 04 in the top plate 03 of the cylinder, in a mounting process, a plurality of battery cells 21 are pushed into the inner cavity of the cylinder from any open end of the cylinder, and then, support ribs need to be additionally arranged between the bottom of each battery cell 21 and the bottom plate 05 of the cylinder. Thus, the preparation process of such high-capacity batteries is relatively complex.

By optimizing the connecting member, Embodiment 19 to Embodiment 24 may not only overcome the problem of excessively high local heat in the electrode terminal, but also overcome the complex technical problems in preparation processes of related high-capacity batteries.

### Embodiment 19

This embodiment provides a connecting member configured to be connected to electrode terminals 08 of battery cells (including positive electrode terminals and negative electrode terminals). The connecting members connected to the positive electrode terminals or negative electrode terminals have the same structure. This embodiment takes an example in which the positive electrode terminal is connected to the connecting member. The structure of the connecting member is shown in Fig. 43 and Fig. 44.

It can be seen from the figure that the connecting member in this embodiment includes a main body 22 of the connecting member and an electrical connection post 25. The electrical connection post 25 is a convex part protruding from the main body 22 of the connecting member.

This embodiment provides the above connecting member to increase the heat dissipation area of the electrode terminal, which may not only overcome the problem of excessively high local heat in the electrode terminal, but also overcome the complex technical problems in preparation processes of related high-capacity batteries.

Related high-capacity batteries are usually prepared by the following process:
Step 1: A cylinder and end plates 07 at two ends of the cylinder are processed.
Step 2: Capacity division and sorting are performed to select a plurality of battery cells 21 meeting requirements. A third through hole is formed in the bottom of a case of the battery cell 21 and then is sealed with a sealing assembly (when a top plate 03 of the cylinder is provided with a gas chamber 52 and the gas chamber 52 is used as a gas sharing chamber, a fourth through hole needs to be formed in the top of the case of the battery cell 21 and then is sealed with a sealing assembly). A plurality of battery cells 21 with sealing assemblies are arranged in the cylinder in step 1. The third through hole with the sealing assembly corresponds to the electrolyte sharing chamber 51 (when the top plate 03 of the cylinder is provided with the gas chamber 52 and the gas chamber 52 is used as the gas sharing chamber, the fourth through hole with the sealing assembly needs to correspond to the gas sharing chamber; when the top plate 03 of the cylinder is provided with the gas chamber 52 and the gas chamber 52 is used as an explosion venting channel, an explosion venting part at the top of each battery cell 21 needs to correspond to the explosion venting channel to ensure that when the explosion venting part is broken through by the flue gas in the inner cavity, the explosion venting part is communicated with the explosion venting channel), thereby ensuring that when the sealing assembly is opened with an external force or an electrolyte, the third through hole is communicated with the electrolyte sharing chamber 51 (the fourth through hole is communicated with the gas sharing chamber). Sealing assemblies disclosed in Chinese patents CN218525645U and CN218525614U may be used. The electrode terminal 08 of each battery cell extends out of the electrode terminal avoiding hole 04 corresponding to the top plate 03 of the cylinder. In order to ensure that the electrode terminal 08 of each battery cell may extend out of the electrode terminal avoiding hole 04 at the top of the cylinder, in a mounting process, support ribs need to be additionally arranged between the bottom of each battery cell 21 and the bottom plate 05 of the cylinder.

During mounting, a plurality of battery cells 21 with sealing assemblies may be arranged in the cylinder in the following examples:(1) Strip-shaped equal-height support ribs are selected.

A plurality of battery cells 21 are fixed into a whole and pushed into the inner cavity of the cylinder from any open end of the cylinder. In this case, the bottom of each battery cell 21 is in contact with the bottom plate 05 of the cylinder, and the electrode terminal 08 of each battery cell corresponds to the corresponding electrode terminal avoiding hole 04, but does not extend out of the electrode terminal avoiding hole 04. Then, the plurality of battery cells 21 are supported from the bottom by a lifting tool to ensure that the bottom of each battery cell 21 is detached from the bottom plate 05 of the cylinder, and the electrode terminal 08 of each battery cell extends out of the corresponding electrode terminal avoiding hole 04. Then, strip-shaped equal-height support ribs are inserted along an x direction, and then, the lifting tool is taken out.

It should be noted that in a z direction, the sizes of the strip-shaped equal-height support ribs need to ensure that when support ribs are additionally arranged between the bottom of each battery cell 21 and the bottom plate 05 of the cylinder, the electrode terminal 08 of each battery cell extends out of the corresponding electrode terminal avoiding hole 04.

(2) A plurality of cushion blocks in one-to-one correspondence to battery cells 21 are selected to form support ribs.

A plurality of battery cells 21 are sequentially pushed into the inner cavity of the cylinder from any open end of the cylinder. When each battery cell 21 is pushed in place, each cushion block needs to be inserted between the bottom of each battery cell 21 and the bottom plate 05 of the cylinder to ensure that the battery cell electrode terminal 08 completely extends out of the corresponding electrode terminal avoiding hole 04. In most cases, in this example, the sizes of the cushion blocks corresponding to each battery cell 21 in the z direction are different.

Step 3: End plates 07 are welded at two opposite open ends of the cylinder, and the electrode terminal avoiding hole 04 is welded to the peripheral part of the electrode terminal of the case of the battery cell 21 to achieve sealing.

Step 4: The sealing assembly is opened with an external force or an electrolyte, and the inner cavity of the electrolyte sharing chamber 51 is communicated with the electrolyte region in the inner cavity of each battery cell 21 (when the top plate 03 of the cylinder is provided with the gas chamber 52 and the gas chamber 52 is used as the gas sharing chamber, the inner cavity of the gas sharing chamber is communicated with the gas region in the inner cavity of each battery cell 21).

In the above method, in order to enable the electrode terminal 08 of each battery cell to extend out of the corresponding electrode terminal avoiding hole 04, support ribs must be additionally arranged in the mounting process, so that the preparation process is relatively complex.

In this embodiment, when the main body 22 of the connecting member is additionally provided with the electrical connection post 25, the battery cell electrode terminal 08 does not need to extend out of the corresponding electrode terminal avoiding hole 04, but the electrical connection post 25 of the connecting member extends into the electrode terminal avoiding hole 04 and is connected to the battery cell electrode terminal 08 located in the inner cavity of the cylinder. Therefore, during assembly, support ribs do not need to be additionally arranged between the bottom of the battery cell 21 and the bottom plate 05 of the cylinder, thereby simplifying the preparation process of such high-capacity batteries.

As shown in Fig. 45, in step 2 of this embodiment, each battery cell 21 is pushed into the cylinder, and the electrical connection post 25 of the connecting member extends into the electrode terminal avoiding hole 04 and is connected to the electrode terminal.

It can be seen from Fig. 43 to Fig. 45 that a main body 22 of the connecting member in this embodiment is a rectangular block. In some other embodiments, the main body 22 of the connecting member may also be a cylinder. The main body 22 of the connecting member may be made of metal materials with better electrical conductivity and heat conductivity, such as silver, copper, and aluminum. However, comprehensively considering the cost and electrical conduction and heat conduction effects, aluminum is generally selected as the material for the connecting member.

In this embodiment, the electrical connection post 25 is a cylinder fixed at the bottom of the main body 22 of the connecting member. The cross section of the cylinder is matched with the cross section of the battery cell electrode terminal 08. The electrical connection post 25 is connected to the battery cell electrode terminal 08. In other embodiments, the electrical connection post 25 may also be a cylinder with a cross-sectional area smaller than that of the battery cell electrode terminal 08. However, compared to this embodiment, the reliability of connection between the electrical connection post 25 and the battery cell electrode terminal 08 is poor.

In order to facilitate the connection between the electrical connection post 25 and the battery cell electrode terminal 08, as shown in Fig. 45 and Fig. 46, in this embodiment, the main body 22 of the connecting member is provided with a first hole. The first hole may be a through hole or a blind hole. When the first hole is a through hole, the first hole may be a threaded through hole and is connected to the battery cell electrode terminal 08 by means of screw connection. When the first hole is a blind hole, the bottom of the blind hole 24 may be connected to the battery cell electrode terminal 08 by fusion welding or may be connected to the battery cell electrode terminal 08 by means of screw connection. Compared to the screw connection, the welding connection has higher reliability, so that in this embodiment, the first hole is preferably a blind hole, and welding connection is selected. In order to eliminate the welding stress, the bottom of the blind hole 24 may be provided with a through hole communicated with the blind hole 24. It can also be understood that the structure of the first hole is a stepped hole, a large hole of the stepped hole is close to an upper end surface of the main body 22 of the connecting member, and a small hole of the stepped hole is close to a lower end surface of the main body 22 of the connecting member, as shown in Fig. 47.

It should be noted that the volume of the main body 22 of the connecting member should not be too large to avoid an increase in the distance between adjacent battery cells 21 when grouping, resulting in an increase in the volume of the entire high-capacity battery, and thus the capacity density of energy storage devices constructed by such high-capacity batteries is relatively low.

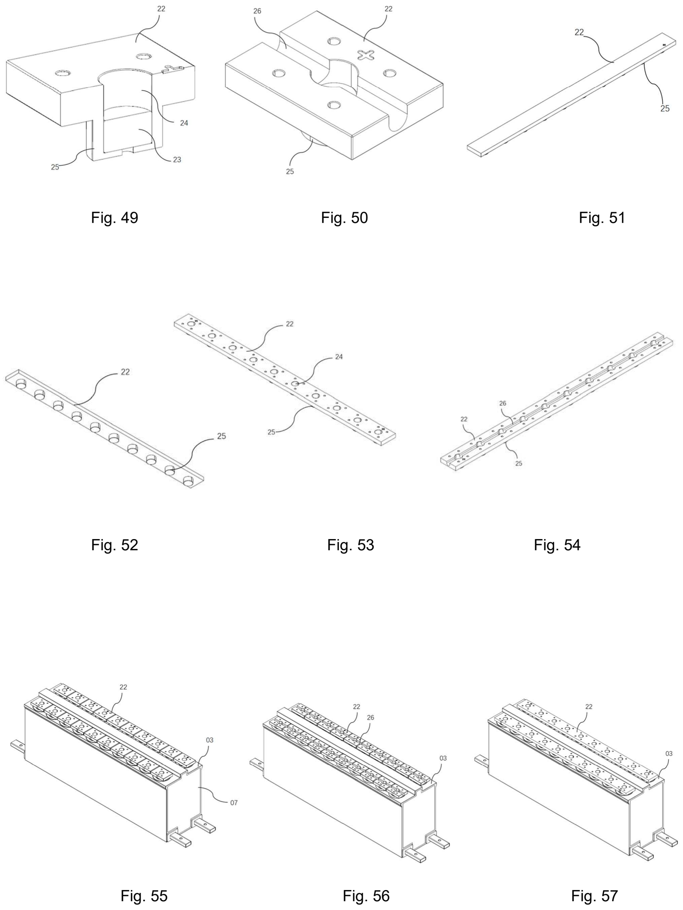

Considering that the electrical conductivity of a hollow conductor is weaker than that of a solid conductor due to different flow cross sections, when the main body 22 of the connecting member is connected to the electrode terminal, a conductive post 23 is fixed in the first hole in this embodiment to improve the electrical conductivity of the connecting member, as shown in Fig. 48 and Fig. 49.

The first hole may be a circular hole, a square hole, or another anisotropic hole. In order to adapt to the shape of the electrode terminal, a circular hole is preferred in this embodiment. The shape of the conductive post 23 is matched with the first hole and is cylindrical, the outer diameter of the conductive post 23 may be slightly larger than the diameter of the first hole, and the conductive post 23 is connected to the first hole by means of interference fit. In order to facilitate the fixation of the conductive post 23 in the first hole, a chamfer may be set on an end surface of the conductive post 23. The height of the conductive post 23 may be the same as the hole depth of the first hole or slightly smaller than the hole depth of the first hole. This embodiment does not limit the height of the conductive post 23. The material of the conductive post 23 is the same as the material of the main body 22 of the connecting member.

### Embodiment 20

As shown in Fig. 50, different from Embodiment 19, in this embodiment, the main body 22 of the connecting member in Embodiment 19 is provided with a clamping part for mounting a heat transfer pipe. When a high-capacity battery is constructed by battery cells 21 with such connecting members, a heat transfer pipe is mounted at the clamping part of the connecting member, and the heat concentrated on the electrode terminal may be transferred from the connecting member to the heat transfer pipe and then carried away. Similarly, when the ambient temperature is too low and battery cells 21 may not be started normally, the external temperature control apparatus may also heat each battery cell 21 through the heat transfer pipe.

The clamping part may be a through hole or groove 26 formed in the main body 22 of the connecting member, and the through hole or groove 26 extends along an x direction and penetrates through two ends of the main body 22 of the connecting member. The size of the through hole or groove 26 needs to ensure that the heat transfer pipe is closely clamped in the through hole or groove 26, so as to ensure the mounting stability while also ensuring the heat transfer effect between the heat transfer pipe and the connecting member. Compared to the through hole, if there are a large number of battery cells 21 in groups, the heat transfer pipe is more easily fixed in the groove 26. Moreover, when the heat transfer pipe is made of a metal material such as a copper pipe or a heat pipe, it is easier to ensure that the heat transfer pipe is in close contact with the groove wall of the groove 26 compared to the through hole (by extruding the copper pipe or heat pipe from the opening of the groove 26 with an external tool to cause deformation). The cross section of the groove 26 may be designed into a U shape or C shape.

When the groove 26 is communicated with the first hole, the conductive post 23 in the first hole also has the function of improving the heat conduction effect, so that the electrode terminal and the heat transfer pipe may better achieve heat exchange.

### Embodiment 21

Different from the above embodiments, the connecting member in this embodiment is a slender rectangular block. The slender rectangular block is provided with a plurality of electrical connection posts 25. Each electrical connection post 25 is configured to be connected to positive electrode terminals or negative electrode terminals of all battery cells 21 in a high-capacity battery. The slender rectangular block may also be provided with blind holes 24 which are in one-to-one correspondence to the electrical connection posts 25 and extend to the electrical connection posts 25. A conductive post 23 is arranged in each of the plurality of blind holes 24, and an outer wall of the conductive post 23 is in close contact with an inner wall of the plurality of blind holes 24.

Fig. 51, Fig. 52 and Fig. 53 are schematic structural views of two connecting members in this embodiment. It can be understood that the slender connecting member is composed of a plurality of connecting members in Embodiment 19 arranged along a same direction and sequentially connected into a whole.

Fig. 54 is another schematic structural view of a connecting member in this embodiment. It can be understood that the slender connecting member is composed of a plurality of connecting members in Embodiment 20 arranged along a same direction and sequentially connected into a whole.

When the battery cells 21 are grouped, the connecting member on the high-capacity battery may not only be connected to the electrical connector, but also achieve electrical connection between the battery cells 21. Moreover, the connecting member in Fig. 54 is provided with a clamping part for mounting a heat transfer pipe. When grouping, the heat transfer pipe is mounted at the clamping part for mounting a heat transfer pipe, and the heat concentrated on the electrode terminal may be transferred from the connecting member to the heat transfer pipe and then carried away to an external temperature control apparatus for processing. Similarly, when the ambient temperature is too low and battery cells 21 may not be started normally, the external temperature control apparatus may also heat each battery cell 21 through the heat transfer pipe and the connecting member. In addition, the connecting member is a slender member, and when the electrode terminals 08 of each battery cell are connected through the slender member, the temperature distribution of the electrode terminals 08 of each battery cell is more uniform during heating or cooling, so that the temperature control effect is better.

### Embodiment 22

This embodiment provides a high-capacity battery, including a housing, ten battery cells 21 arranged in the housing, and twenty connecting members in Embodiment 19 or Embodiment 2, as shown in Fig. 55 and Fig. 56. In some other embodiments, the number of battery cells 21 may be adjusted according to needs, and the number of the corresponding connecting members also needs to be adjusted correspondingly. The positive electrode terminal and negative electrode terminal of each battery cell 21 need to be connected with a connecting member.

The housing is composed of a cylinder and end plates 07 fixed at two ends of the cylinder.

A top plate 03 of the cylinder is provided with electrode terminal avoiding holes 04 corresponding to the electrode terminal 08 of each battery cell, and a region of the housing corresponding to the electrode terminal avoiding hole 04 and a case of the battery cell 21 are fixedly sealed.

The electrode terminal 08 of each battery cell is located in the cylinder, and each electrical connection post 25 on the connecting member extends into the electrode terminal avoiding hole 04 and is connected to the corresponding battery cell electrode terminal 08.

### Embodiment 23

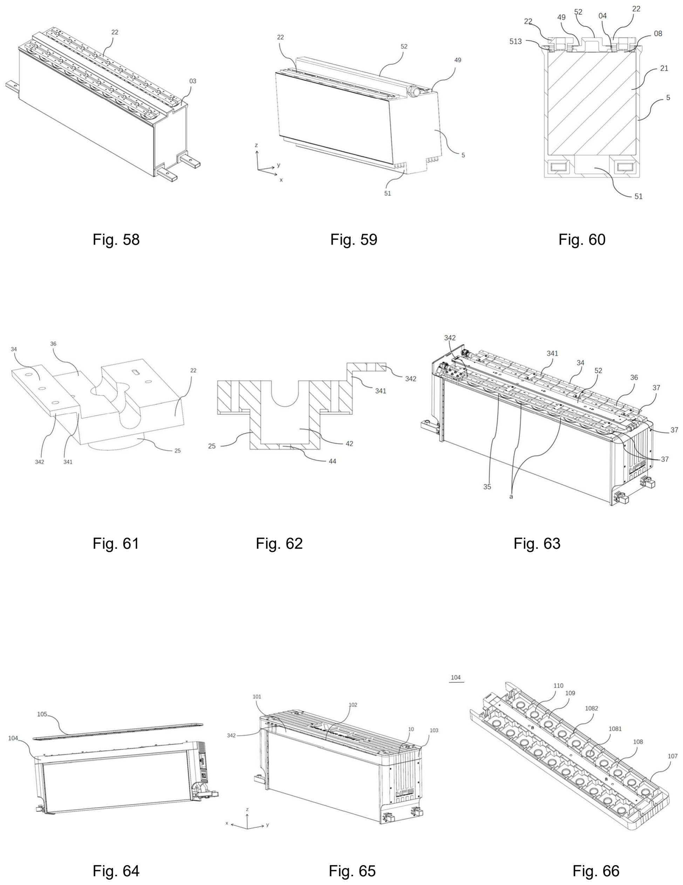

This embodiment provides a high-capacity battery, including a housing, ten battery cells 21 arranged in the housing, and two connecting members in Embodiment 21, as shown in Fig. 57 and Fig. 58. In some other embodiments, the number of battery cells 21 may be adjusted according to needs.

The housing is composed of a cylinder and end plates 07 fixed at two ends of the cylinder.

A top plate 03 of the cylinder is provided with electrode terminal avoiding holes 04 corresponding to the electrode terminal 08 of each battery cell, and a region of the housing corresponding to the electrode terminal avoiding hole 04 and a case of the battery cell 21 are fixedly sealed.

One connecting member is connected to the positive electrode terminals of all battery cells 21, and the other connecting member is connected to the negative electrode terminals of all battery cells 21. By mounting the heat transfer pipe in the groove 26 of the high-capacity battery shown in Fig. 58, the heat concentrated on the electrode terminal may be transferred from the connecting member to the heat transfer pipe and then carried away to an external temperature control apparatus for processing. Similarly, when the ambient temperature is too low and battery cells 21 may not be started normally, the external temperature control apparatus may also heat each battery cell 21 through the heat transfer pipe and the connecting member. In addition, the connecting member is a slender member, and when the electrode terminals 08 of each battery cell are connected through the slender member, the temperature distribution of the electrode terminals 08 of each battery cell is more uniform during heating or cooling, so that the temperature control effect is better.

### Embodiment 24

This embodiment provides an energy storage device, including two high-capacity batteries as described in Embodiment 22 or Embodiment 23 and an electrical connector. In practical applications, the number of high-capacity batteries and the number of electrical connectors may be selected according to needs.

The two high-capacity batteries are arranged side by side. Two adjacent high-capacity batteries are connected in series through the electrical connector. One side of the electrical connector is connected to the connecting member connected to a positive electrode terminal in a high-capacity battery, and the other side of the electrical connector is connected to the connecting member connected to a negative electrode terminal in another high-capacity battery. Threaded holes may be formed in the main body 22 of the connecting member to facilitate the connection between the main body 22 of the connecting member and the electrical connector.

Embodiment 25 to Embodiment 34 provide connecting members different from those in the above embodiments to overcome the problem of excessively high electrode terminal temperature in the background art and prevent the overflow of an insulated sealant from a part of a sealant injection region. The following will provide a detailed description with reference to Fig. 59 to Fig. 78.

A related art provides a high-capacity battery, as shown in Fig. 59 and Fig. 60. The high-capacity battery includes a housing 5 and a plurality of battery cells 21. The plurality of battery cells 21 are arranged in parallel in the housing 5, and a top plate 49 of the housing is provided with electrode terminal avoiding holes 04 corresponding to the electrode terminal 08 of each battery cell. The electrode terminal 08 of each battery cell is connected to the main body 22 of the connecting member through the electrode terminal avoiding hole 04, and a region of the housing 5 corresponding to the electrode terminal avoiding hole 04 and a case of the battery cell 21 are fixedly sealed.

As shown in Fig. 60, usually, a sealed connector 513 is able to be additionally arranged between the electrode terminal avoiding hole 04 and an upper cover plate of the battery cell 21 to achieve sealing. The sealed connector 513 includes a hollow member. The bottom of the hollow member is configured to be hermetically connected to a first region of the battery cell 21, and the top of the hollow member is hermetically connected to a second region of the housing 5. The first region is a region at the periphery of any electrode terminal in the upper cover plate of any battery cell 21. The second region is a region corresponding to any electrode terminal avoiding hole 04 on the housing 5. The region corresponding to the electrode terminal avoiding hole 04 is a peripheral region corresponding to any electrode terminal avoiding hole 04 on the outer surface of the housing 5; or the region corresponding to the electrode terminal avoiding hole 04 is a hole wall of the electrode terminal avoiding hole 04. The region at the periphery of the electrode terminal is a region at the periphery of an insulated gasket on the electrode terminal. The insulated gasket is a component used on the battery cell 21 for insulation between the electrode terminal and the upper cover plate. In a case that the sizes of the battery cells 21 in groups in the z direction are relatively consistent, the region of the housing 5 corresponding to the electrode terminal avoiding hole 04 may be directly welded to the region of the upper cover plate at the periphery of the battery cell electrode terminal 08 to achieve sealing.

A bottom plate of the housing 5 is provided with an electrolyte sharing chamber 51, and the electrolyte sharing chamber 51 is communicated with an electrolyte region in an inner cavity of each battery cell 21. By the electrolyte sharing chamber 51, each battery cell 21 is able to be located in a unified electrolyte environment, thereby ensuring the uniformity of the electrolyte in each battery cell 21, and improving the performance and cycle life of the high-capacity battery.

The top plate 49 of the housing may also be provided with a gas chamber 9, and the gas chamber 9 may be communicated with a gas region in the inner cavity of each battery cell 21 to achieve gas balance of each battery cell 21, thereby further improving the performance and cycle life of the high-capacity battery. The gas chamber 9 may also be used as an explosion venting channel. When any battery cell 21 experiences thermal runaway, the thermal runaway flue gas in the inner cavity of the battery cell 21 enters the gas chamber 9 and breaks through an explosion venting mechanism arranged at any end of the gas chamber 9 and then is discharged.

The above high-capacity battery will release heat during use. If the heat dissipation is not timely, it will significantly shorten the battery life, intensify the energy loss, and even cause potential safety hazards such as spontaneous combustion and fire. Therefore, in order to improve the heat dissipation efficiency of the above high-capacity battery, a liquid cooling pipe may be fixed on the main body 22 of the connecting member to achieve heat dissipation in a primary heat exchange manner.

However, during long-term use, condensation may occur on the surface due to the temperature difference between the inside and outside of the liquid cooling pipe. When the condensation accumulates to a certain amount, it will seep into the gap between the main body 22 of the connecting member and the top plate 49 of the housing. When the sealed connector 513 is provided, the condensation may still seep into the space between the sealed connector 513 and the electrode terminal or main body 22 of the connecting member, leading to electrical conduction between the main body 22 of the connecting member and the housing 5, which may result in a short circuit of the same battery cell 21.

In order to solve the above problems, it is possible to lay an insulated sealant having a thickness greater than that of the main body 22 of the connecting member on the top plate 49 of the housing, and the entire main body 22 of the connecting member is wrapped with the insulated sealant, that is, each gap between the main body 22 of the connecting member and the top plate 49 of the housing is injected with the insulated sealant, so as to ensure that the condensation may not enter the gap between the main body 22 of the connecting member and the top plate 49 of the housing, so that such high-capacity batteries have higher safety.

However, when the main body 22 of the connecting member is completely wrapped with the insulated sealant, how to achieve electrical connection with external devices is a problem to be solved, In addition, during sealant injection, the insulated sealant is prone to overflow from a top surface 36 of the connecting member and flow towards the outer wall of the housing 5. Of course, a sealant injection mold may be used. However, when sealant injection, a demolding process is needed and is relatively complex. In addition, during the demolding process, it is possible to damage the structure of the insulated sealant layer, resulting in a decrease in sealing reliability.

Therefore, in order to improve the insulated sealing performance of the top of the high-capacity battery and prevent the condensation generated by the liquid cooling pipe from seeping into the interior of the battery, leading to a short circuit, Embodiment 25 to Embodiment 34 consider that the entire connecting member of the high-capacity battery is injected with the insulated sealant.

The following two problems need to be mainly considered:
1. The problem of electrical connection of connecting members.
2. The problem of overflow of a sealant from a top surface of a connecting member during sealant injection.

The problem 1 may be overcome in the following example:
The structure of the connecting member is optimized, an electrical connection component is additionally arranged on the connecting member, and it is ensured that the electrical connection component is not injected with a sealant and is configured to be connected to an electrical connector. The electrical connector here is a connection device for enabling two high-capacity batteries to be connected in series, or may be a connection device for connecting the high-capacity battery to an external load.

The problem 2 may be overcome in the following example:
A sealant blocking structure is additionally arranged on the connecting member. The sealant blocking structure may be a part of the electrical connection component.

Based on the above analysis, connecting members are improved in Embodiment 25 to Embodiment 34. The following will provide a detailed description with reference to the accompanying drawings and specific embodiments.

### Embodiment 25

This embodiment provides a connecting member having a structure shown in Fig. 61, including a main body 22 of the connecting member and an electrical connection component 34, wherein the main body 22 of the connecting member is configured to be connected to the electrode terminal 08 of each battery cell, and a top surface 36 of the connecting member is used as a surface for laying an insulated sealant; and the electrical connection component 34 is configured to be connected to an external electrical connector and to prevent the overflow of the insulated sealant from the top surface 36 of the connecting member.

The structure of the connecting member is shown in Fig. 61 and Fig. 62. The connecting member in this embodiment includes a main body 22 of the connecting member and an electrical connection post 25 arranged on the main body 22 of the connecting member.

The main body of the connecting member is a rectangular block. In some other embodiments, the main body of the connecting member may also be a cylinder. The main body of the connecting member may be made of metal materials with better electrical conductivity and heat conductivity, such as silver, copper, and aluminum. However, comprehensively considering the cost and electrical conduction and heat conduction effects, aluminum is generally selected as the material for the main body of the connecting member.

In this embodiment, the electrical connection post 25 is a cylinder fixed at the bottom of the main body of the connecting member. The cross section of the cylinder is matched with the cross section of the battery cell electrode terminal 08. The electrical connection post 25 is connected to the battery cell electrode terminal 08.

In order to facilitate the connection between the electrical connection post 25 and the battery cell electrode terminal 08, in this embodiment, the main body of the connecting member is provided with a first hole 42. The first hole 42 may be a through hole or a blind hole. When the first hole 42 is a through hole, the first hole 42 may be a stepped through hole and is connected to the battery cell electrode terminal 08 by means of screw connection. When the first hole 42 is a blind hole, the bottom of the blind hole may be connected to the battery cell electrode terminal 08 by fusion welding. Compared to the screw connection, the welding connection has higher reliability, so that in this embodiment, the first hole 42 is preferably a blind hole, and the welding connection is selected. In order to eliminate the welding stress, the bottom of the blind hole may be provided with a through hole 44 communicated with the blind hole. It can also be understood that the structure of the first hole 42 is a stepped hole, a large hole of the stepped hole is close to a top surface of the main body of the connecting member, and a small hole of the stepped hole is close to a bottom surface of the main body of the connecting member, as shown in Fig. 62.

Considering that the electrical conductivity of a hollow conductor is weaker than that of a solid conductor due to different flow cross sections, when the connecting member is connected to the battery cell electrode terminal, a conductive post may be fixed in the first hole 42 in this embodiment to improve the electrical conductivity of the main body 22 of the connecting member.

The first hole 42 may be a circular hole, a square hole, or another anisotropic hole. In order to adapt to the shape of the electrode terminal, a circular hole is preferred in this embodiment. The shape of the conductive post is matched with the first hole 42 and is cylindrical, the outer diameter of the conductive post may be slightly larger than the diameter of the first hole 42, and the conductive post is connected to the first hole 42 by means of interference fit. In order to facilitate the fixation of the conductive post in the first hole 42, a chamfer may be set on an end surface of the conductive post. The height of the conductive post may be the same as the hole depth of the first hole 42 or slightly smaller than the hole depth of the first hole 42. This embodiment does not limit the height of the conductive post. The material of the conductive post is the same as the material of the main body of the connecting member.

In this embodiment, the main body 22 of the connecting member is provided with a clamping part for mounting a liquid cooling pipe 514. When a high-capacity battery is constructed by battery cells 21 with such main bodies 22 of the connecting members, a liquid cooling pipe 514 is mounted at the clamping part of the main body 22 of the connecting member, and the heat concentrated on the electrode terminal may be transferred from the main body 22 of the connecting member to the liquid cooling pipe 514 and then carried away. Similarly, when the ambient temperature is too low and battery cells 21 may not be started normally, an external temperature control apparatus may also heat each battery cell 21 through the liquid cooling pipe 514.

The clamping part may be a through hole or groove formed in the main body of the connecting member, and the through hole or groove extends along an x direction and penetrates through two ends of the main body of the connecting member. The size of the through hole or groove needs to ensure that the liquid cooling pipe 514 is closely clamped in the through hole or groove, so as to ensure the mounting stability while also ensuring the heat transfer effect between the liquid cooling pipe 514 and the main body 22 of the connecting member.

It can be seen from Fig. 61 and Fig. 62 that in this embodiment, the electrical connection component 34 and the main body 22 of the connecting member are of an integrated structure. In the x direction, the size of the electrical connection component 34 is equal to the size of the main body 22 of the connecting member. The electrical connection component 34 is an inverted L-shaped plate. A vertical plate 341 of the inverted L-shaped plate is parallel to an xz plane and is fixed at an edge of the top surface 36 of the connecting member extending along the x direction, so as to prevent the overflow of the insulated sealant from the edge of the top surface 36 of the connecting member extending along the x direction. A transverse plate 342 of the inverted L-shaped plate is parallel to an xy plane and is configured to be connected to an external electrical connector. In some cases, the transverse plate 342 may also be directly used as an electrical connector.

### Embodiment 26

This embodiment provides a high-capacity battery with connecting members in Embodiment 25. The structure of the high-capacity battery is shown in Fig. 63. A sealant may be directly injected to the main body 22 of the connecting member to enable the insulated sealant to completely wrap the entire main body 22 of the connecting member, that is, an insulated sealant layer having a thickness greater than the thickness (size in the z direction) of the main body 22 of the connecting member is laid on the top plate 49 of the housing to enable the insulated sealant layer to completely cover the main body 22 of the connecting member. It can also be understood that in addition to an insulated sealant layer arranged in a first gap (region a) between the bottom surface 35 of the connecting member and the top plate 49 of the housing, insulated sealant layers are also arranged on the top surface 36 of the connecting member and the side surface 37 of each connecting member. The bottom surface 35 of the connecting member is a surface on the main body 22 of the connecting member that is parallel to the top plate 49 of the housing and close to the top plate 49 of the housing. The top surface 36 of the connecting member is a surface on the main body 22 of the connecting member that is parallel to the top plate 49 of the housing and is away from the top plate 49 of the housing. The side surface 37 of the connecting member is a surface on the main body 22 of the connecting member that is perpendicular to both the bottom surface 35 of the connecting member and the top surface 36 of the connecting member.

It should be noted that during sealant injection, it is necessary to ensure that the transverse plate 342 of the electrical connection component 34 extends out of the insulated sealant layer, that is, there is no insulated sealant on the transverse plate 342. The transverse plate 342 is configured to be connected to an external electrical connector, and adjacent high-capacity batteries may be connected in series through an electrical connector. In some cases, adjacent high-capacity batteries may use the transverse plates 342 of respective electrical connection components 34 as electrical connectors, and through the interconnection between respective transverse plates 342, two high-capacity batteries may be connected in series.

It should also be noted that if the top plate 49 of the housing is not provided with the gas chamber 9, the top plate 49 of the housing may also be provided with an opening corresponding to the explosion venting port of each battery cell 21, and the peripheral region of the opening is sealed with the upper cover plate of the battery cell 21. During sealant injection, a sealant blocking structure may be additionally arranged above the explosion venting port of each battery cell 21 to prevent the insulated sealant from covering the explosion venting port and causing safety accidents. After sealant injection, the sealant blocking structure is disassembled. In addition, when the top plate 49 of the housing is provided with the gas chamber 9, the gas chamber 9 may be used as the sealant blocking structure.

During sealant injection, under the blocking of the vertical plate 341 of the electrical connection component 34 and the gas chamber 9, the insulated sealant will not overflow from the edge of the main body 22 of the connecting member parallel to the x direction. However, the insulated sealant may overflow from the edge parallel to the y direction, or may overflow from the top plate 49 of the housing. Therefore, it is necessary to additionally provide a sealant injection mold to prevent the overflow of the insulated sealant from the edge parallel to the y direction and the top plate 49 of the housing. After sealant injection, the sealant injection mold is disassembled.

### Embodiment 27

Different from Embodiment 26, in this embodiment, an insulated shield 10 is additionally arranged at the top of the high-capacity battery on the basis of Embodiment 26. On the one hand, it may avoid the potential safety hazards that may exist when the main body 22 of the connecting member is exposed during the operation of the high-capacity battery, and also prevent some foreign matters in the external environment from falling into the position of the main body 22 of the connecting member and causing a short circuit in the high-capacity battery, thereby improving the safety of the high-capacity battery. On the other hand, a part of the structure of the insulated shield 10 is used as a sealant injection mold to simplify the sealant injection process, there is no need to demold after sealant injection, and the bonding strength between the insulated shield 10 and the top of the high-capacity battery may also be improved.

The specific structure is shown in Fig. 64 and Fig. 65. The insulated shield 10 includes an insulated frame body 104 and an insulated cover plate 105 covering the insulated frame body 104. The lower end of the insulated frame body 104 is configured to cooperate with the top of the high-capacity battery and is fixed at the top of the high-capacity battery by means of screw connection or bonding, and the insulated cover plate 105 is fastened and mounted at the upper end of the insulated frame body 104. The upper end of a side wall (second side wall 101) of the insulated frame body 104 parallel to the xz plane is provided with a notch, and the notch cooperates with the insulated cover plate 105 to form a slit 102. A side wall (first side wall 103) of the insulated frame body 104 parallel to the yz plane is provided with a channel (not shown in the figure) for the liquid cooling pipe 514 to pass through.

During assembly, first, the insulated frame body 104 may be fixed at the top of the high-capacity battery, and the transverse plate 342 is located at the slit 102 (see Fig. 65); then, the electrical connector is connected to the main body 22 of the connecting member through the slit 102, (in a case that the transverse plate 342 extends out of the slit 102, adjacent high-capacity batteries may use the transverse plates 342 of respective electrical connection components 34 as electrical connectors, and through the interconnection between respective transverse plates 342, two high-capacity batteries may be connected in series); and after the main body 22 of the connecting member is injected with the sealant, the insulated cover plate 105 is fixed at the upper end of the insulated frame body 104.

In this embodiment, the structure of the insulated frame body 104 is optimized to serve as both an insulated protective case and a sealant injection mold. The structure of the insulated frame body 104 is shown in Fig. 66, Fig. 67 and Fig. 68.

In this embodiment, the insulated frame body 104 includes a second insulated frame 107 and an insulated bottom plate 108 fixed at any open end of the second insulated frame 107. The insulated bottom plate 108 is provided with an electrical connection post avoiding hole 1081 corresponding to the main body 22 of each connecting member. The size of the electrical connection post avoiding hole 1081 needs to allow the electrical connection post 25 on the main body 22 of the connecting member to pass through, and allow the part of the main body of the connecting member not to pass through.

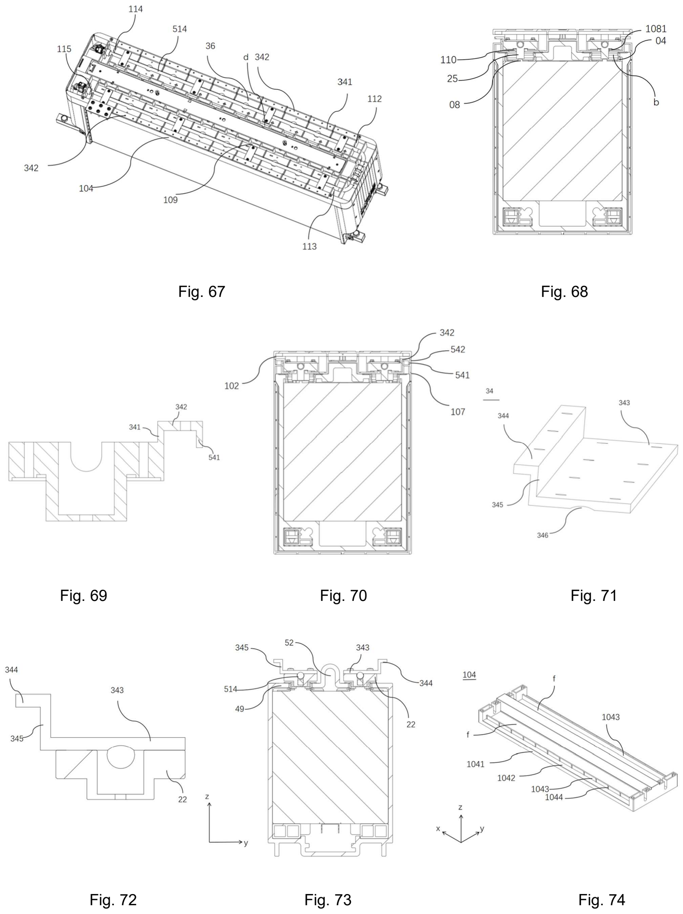

Partitions 1082 are arranged around each electrical connection post avoiding hole 1081 to form an accommodating cavity 109 of each connecting member. After the insulated frame body 104 is fixed at the top of the high-capacity battery, the electrical connection post 25 on the main body 22 of each connecting member passes through the electrical connection post avoiding hole 1081 and the electrode terminal avoiding hole 04 on the top plate 49 of the housing and is connected to the electrode terminal 08 of each battery cell. A fourth gap is formed between the side wall of the accommodating cavity 109 of the connecting member parallel to the plane xz and the side surface of the main body 22 of the connecting member parallel to the plane xz, as shown in the region in Fig. 67. The transverse plate 342 of the electrical connection component 34 is located at the notch of the insulated frame body 104. Electrical connection may be better achieved based on the electrical connector.

The sealant is injected into the sealant injection space through the fourth gap. In this embodiment, the insulated sealant is injected into both the top surface 36 of the connecting member and the accommodating cavity 109 of the connecting member. Under the blocking of the vertical plate 341 of the electrical connection component 34 and the outermost partitions 1082 (it can be seen from the figure that the four outermost partitions 1082 on the insulated bottom plate 108 are slightly higher than the main body 22 of the connecting member, and the four outermost partitions 1082 are respectively defined as a first partition 112, a second partition 113, a third partition 114, and a fourth partition 115), the insulated sealant will not overflow from the top surface 36 of the connecting member. Moreover, the transverse plate 342 is used as an electrical connection part. Because the transverse plate 342 is higher than the top surface 36 of the connecting member in the z direction, the insulated sealant will not appear on the transverse plate 342 and will not affect the electrical conductivity of the main body 22 of the connecting member.

When the diameter of the electrical connection post avoiding hole 1081 is greater than the outer diameter of the electrical connection post 25 of the main body 22 of the connecting member, the insulated sealant will enter a region b, namely a second gap (as shown in Fig. 68), from a gap between the two. If there is insufficient welding between the electrical connection post 25 of the main body 22 of the connecting member and the electrode terminal 08 of each battery cell, when the insulated sealant enters the region b, the electrical conductivity of the main body 22 of the connecting member and the electrode terminal 08 of each battery cell may be affected. In order to avoid such problems and reduce the amount of the sealant used, an annular sealant blocking ring 110 may be additionally arranged at an outer edge of the electrical connection post avoiding hole 1081 to prevent the insulated sealant from flowing into the region b. It should be noted that the outer edge of the electrical connection post avoiding hole 1081 here may be a hole wall of the electrical connection post avoiding hole 1081, or a bottom plate region of the sealant injection space around the electrical connection post avoiding hole 1081. It can be seen from the figure that the annular sealant blocking ring 110 is perpendicular to the bottom plate of the accommodating cavity 109 of the connecting member and protrudes towards the direction of the insulated cover plate 105. Moreover, to cooperate with the annular sealant blocking ring 110, the bottom surface 35 of the connecting member is provided with an annular groove 111, and the annular sealant blocking ring 110 may be directly inserted into the annular groove 111.

### Embodiment 28

Different from Embodiment 25, in this embodiment, a first bearing plate 541 is additionally arranged on the main body 22 of the connecting member. In the x direction, the size of the first bearing plate 541 is equal to the size of the main body 22 of the connecting member.

The specific structure is shown in Fig. 69. In this embodiment, the edge of the transverse plate 342 of the electrical connection component 34 of the main body 22 of the connecting member in Embodiment 25 parallel to the x direction is provided with a first bearing plate 541 perpendicular thereto. The first bearing plate 541 cooperates with the insulated frame body 104 to improve the structural stability of such high-capacity batteries.

### Embodiment 29

In this embodiment, in order to cooperate with the connecting member in Embodiment 28, the structure of the insulated frame body 104 is improved on the basis of Embodiment 27. As shown in Fig. 70, a second bearing plate 542 matched with the first bearing plate 541 in Embodiment 28 is additionally provided. The side wall of the second insulated frame 107 parallel to the xz plane is provided with the second bearing plate 542 coplanar therewith, and the second bearing plate 542 may be integrated with the second insulated frame 107. After assembling, the first bearing plate 541 abuts against the second bearing plate to improve the structural stability of such high-capacity batteries.

### Embodiment 30

Different from the above embodiments, in this embodiment, the electrical connection component 34 and the main body 22 of the connecting member are separate components. In the x direction, the size of the electrical connection component 34 is equal to the size of the main body 22 of the connecting member. The structure is shown in Fig. 71 and Fig. 72.

The main body 22 of the connecting member in this embodiment is the same as that in the above embodiment, and will not be repeated here.

In this embodiment, the electrical connection component 34 includes a first electrical connection plate 343, a second electrical connection plate 344, and a third connection plate 345, wherein the third connection plate 345 is located between the first electrical connection plate 343 and the second electrical connection plate 344; the first electrical connection plate 343 covers and is fixed on the top surface 36 of the connecting member; a surface where the first electrical connection plate 343 cooperates with the main body 22 of the connecting member is provided with a liquid cooling pipe avoiding channel 346; and when the two are fixed, the first electrical connection plate 343 may also achieve an effect of compressing the liquid cooling pipe 514. The second electrical connection plate 344 is configured to be connected to an external electrical connector (in some cases, the second electrical connection plate 344 may also be directly used as an electrical connector). The third connection plate 345 is configured to prevent the overflow of an insulated sealant from a part of a sealant injection region. It should be noted that the part of the sealant injection region here refers to the top surface of the first electrical connection plate 343. Because the electrical connection component 34 in this embodiment directly covers the top surface 36 of the connecting member, during sealant injection, the insulated sealant needs to be laid on the first electrical connection plate 343 of the electrical connection component 34. Of course, when the insulated sealant is laid on the first electrical connection plate 343, the insulated sealant will also seep into the top surface 36 of the connecting member.

### Embodiment 31

As shown in Fig. 73, this embodiment provides a high-capacity battery. Connecting members in Embodiment 30 are arranged in the high-capacity battery, and the main bodies 22 of the connecting members located on the same side are fixed with a same electrical connection component 34. In some other embodiments, the main body 22 of each connecting member may be respectively fixed with an electrical connection component 34.

A sealant may be directly injected to the connecting member to enable the insulated sealant to completely wrap the first electrical connection plate 343 and the entire main body 22 of the connecting member, that is, an insulated sealant layer having a thickness greater than the sum of the thickness of the main body 22 of the connecting member and the thickness of the first electrical connection plate 343 (the size in the z direction) is laid on the top plate 49 of the housing.

It should be noted that during sealant injection, it is necessary to ensure that the second electrical connection plate 344 extends out of the insulated sealant layer, that is, there is no insulated sealant on the second electrical connection plate 344.

It should also be noted that if the top plate 49 of the housing is not provided with the gas chamber 9, the top plate 49 of the housing needs to be provided with an opening corresponding to the explosion venting port of each battery cell 21, and the peripheral region of the opening is sealed with the upper cover plate of the battery cell 21. During sealant injection, a sealant blocking structure may be additionally arranged above the explosion venting port of each battery cell 21 to prevent the insulated sealant from covering the explosion venting port and causing safety accidents. After sealant injection, the sealant blocking structure is disassembled. In addition, when the top plate 49 of the housing is provided with the gas chamber 9, the gas chamber 9 may be used as the sealant blocking structure, as shown in Fig. 73.

During sealant injection, under the blocking of the third connection plate 345 of the electrical connection component 34 and the gas chamber 9, the insulated sealant will not overflow from the edge of the first electrical connection plate 343 parallel to the x direction. However, the insulated sealant may overflow from the edge parallel to the y direction or may overflow from the top plate 49 of the housing. Therefore, it is necessary to additionally provide a sealant injection mold to prevent the overflow of the insulated sealant from the edge parallel to the y direction and the top plate 49 of the housing. After sealant injection, the sealant injection mold is disassembled.

### Embodiment 32

Different from Embodiment 31, in this embodiment, an insulated shield 10 is additionally arranged at the top of the high-capacity battery on the basis of Embodiment 31. On the one hand, it may avoid the potential safety hazards that may exist when the main body 22 of the connecting member is exposed during the operation of the high-capacity battery, and also prevent some foreign matters in the external environment from falling into the position of the main body 22 of the connecting member and causing a short circuit in the high-capacity battery, thereby improving the safety of the high-capacity battery. On the other hand, a part of the structure of the insulated shield 10 is used as a sealant injection mold to simplify the sealant injection process, there is no need to demold when sealant injection, and the bonding strength between the insulated shield 10 and the top of the high-capacity battery may also be improved.

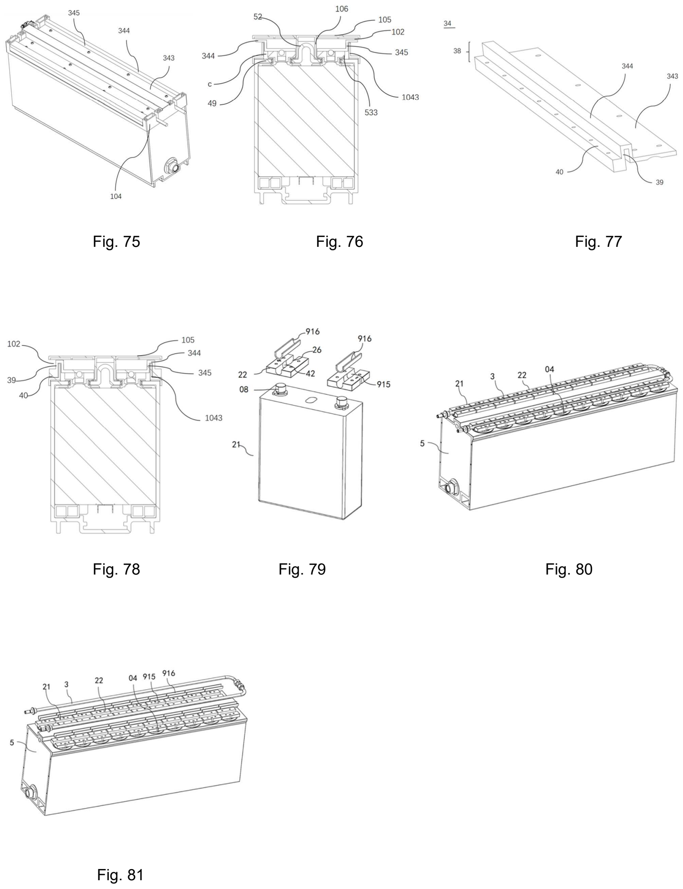

The specific structure is shown in Fig. 74, Fig. 75 and Fig. 76. This embodiment and Embodiment 27 have different insulated frame bodies 104. The insulated frame body 104 in this embodiment only includes a second insulated frame 107 (that is, a region f shown in Fig. 74 is a hollowed-out region, and after assembly, the main body 22 of the connecting member and the first electrical connection plate 343 of the electrical connection component 34 are located in the region, as shown in Fig. 75 and Fig. 76). First surfaces 1042 (surfaces parallel to the xy plane) of two long frames 1041 of the second insulated frame 107 are respectively provided with sealant blocking plates 1043. The sealant blocking plate 1043 extends along the x direction, and in the y direction, a third gap (region c shown in Fig. 76) is formed between the sealant blocking plate 1043 and an outer side surface 533 of the connecting member. In order to improve the strength of the sealant blocking plate 1043, reinforcing ribs 1044 may be additionally arranged on the sealant blocking plate 1043.

It should be noted that a slit 102 should be formed between the sealant blocking plate 1043 and the insulated cover plate 105 for connection between the electrical connector and the main body 22 of the connecting member, as shown in Fig. 76. When the above main body 22 of the connecting member fixed with the electrical connection component 34 is fixed on the electrode terminal 08 of each battery cell, the second electrical connection plate 344 of the electrical connection component 34 is located at the slit 102. Electrical connection may be better achieved based on the electrical connector.

It should also be noted that if the top plate 49 of the housing is not provided with the gas chamber 9, a sealant blocking structure may be additionally arranged above the explosion venting port of each battery cell 21 to prevent the insulated sealant from covering the explosion venting port and causing safety accidents. After sealant injection, the sealant blocking structure is disassembled. In addition, when the top plate 49 of the housing is provided with the gas chamber 9, the gas chamber 9 may be used as the sealant blocking structure. Of course, for the sake of structural regularity, as shown in Fig. 76, baffles 106 parallel to the xz plane may also be arranged on two sides of the gas chamber 9, the top end of the baffle 106 is flush with the insulated cover plate 105, and the baffle 106 may be integrated with the insulated cover plate 105.

In this embodiment, the first electrical connection plate 343 is injected with the insulated sealant. Under the blocking of the third connection plate 345 of the electrical connection component 34 and the side wall of the insulated frame body 104 parallel to the yz plane, the insulated sealant will not overflow from the surface of the first electrical connection plate 343. Under the blocking of the sealant blocking plate 1043, the insulated sealant will also not overflow from the top plate 49 of the housing. Moreover, the second electrical connection plate 344 is used as an electrical connection part. Because the second electrical connection plate 344 is higher than the top surface 36 of the connecting member in the z direction, the insulated sealant will not appear on the second electrical connection plate 344 and will not affect the electrical conductivity of the main body 22 of the connecting member.

### Embodiment 33

Different from Embodiment 30, the structure of the electrical connection component 34 in this embodiment is shown in Fig. 77.

On the basis of the electrical connection component 34 in Embodiment 30, an L-shaped electrical connection plate 38 is additionally provided. In the x direction, the size of the L-shaped electrical connection plate 38 is equal to the size of the main body 22 of the connecting member. A vertical connection plate 39 of the L-shaped electrical connection plate 38 is connected to the second electrical connection plate 344 of the electrical connection component 34, and a transverse connection plate 40 of the L-shaped electrical connection plate 38 is configured to be connected to an electrical connector.

### Embodiment 34

This embodiment provides a high-capacity battery. Different from Embodiment 32, the high-capacity battery is provided with connecting members in Embodiment 33.

As shown in Fig. 60 and Fig. 78, when the main body 22 of the connecting member fixed with the electrical connection component 34 in Embodiment 33 is fixed on the electrode terminal 08 of each battery cell, the transverse connection plate 40 of the electrical connection component 34 is located at the slit 102. Compared to Embodiment 32, the electrical connection space is larger, and electrical connection may be better achieved based on the electrical connector.

Embodiment 35 to Embodiment 36 provide another connecting members and high-capacity batteries with such connecting members.

During the charging and discharging operation of a battery, the battery generates a large amount of heat. If the battery is not cooled in time, the performance of the battery will decrease. At present, a liquid cooling manner is mainly configured to cool the battery. When the liquid cooling manner is configured to cool the battery, a heat transfer pipe is generally configured to exchange heat with a polarity terminal of the battery. The heat transfer pipe is filled with a heat conduction medium. The heat transfer pipe is connected to a temperature control apparatus. The temperature control apparatus processes the heat transferred by the heat transfer pipe. The temperature control apparatus mainly includes a temperature control machine and a circulating pump, wherein the temperature control machine is a device with a heating and/or cooling function and is configured to heat or cool the heat conduction medium in the heat transfer pipe, for example, the temperature control machine specifically refers to a cooling and heating machine or a refrigerating machine with a compressor; and the circulating pump is mainly configured to circulate the heat conduction medium to quickly and effectively process the heat of a battery cell, so that the temperature of the battery cell is controlled within an optimal range.

The above heat transfer pipe is arranged on a polarity terminal of the battery (the polarity terminal here may be understood as a battery cell electrode terminal or connecting member, and the connecting member is mainly taken as an example in the following embodiments) for direct heat exchange with the polarity terminal of the battery. In order to ensure the heat exchange efficiency between the heat transfer pipe and the polarity terminal of the battery, the above heat transfer pipe is generally made of a metal pipe with better heat conductivity, and the heat conduction medium in a conductive post body is a liquid medium, such as water, ethylene glycol/water, propylene glycol/water, methanol/water, ethanol/water, or calcium formate/water.

When the heat transfer pipe is in contact with the polarity terminal of the battery, the heat transfer pipe and the polarity terminal of the battery need to be insulated. If the insulation performance between the heat transfer pipe and the polarity terminal of the battery is poor, when the heat transfer pipe is mounted on the polarity terminal of the battery cell, a short circuit in the battery cell may be caused, resulting in potential safety hazards. Based on this, Embodiment 35 to Embodiment 36 provide a polarity terminal. The polarity terminal is a conductive post body with double insulation, so that when the polarity terminal exchanges heat with the heat transfer pipe, the polarity terminal also has reliable insulation performance.

### Embodiment 35

As shown in Fig. 79, this embodiment provides a polarity terminal. The polarity terminal is a connecting member connected to a battery cell electrode terminal. The polarity terminal includes a conductive post body (main body 22 of the connecting member). The conductive post body includes an electrical connection region and a heat exchange region. The electrical connection region of the conductive post body is configured to achieve electrical connection between the polarity terminal and other components. The heat exchange region of the conductive post body is configured to achieve heat exchange between the polarity terminal and a heat transfer pipe. Specifically, the conductive post body is provided with a groove 26, and the heat exchange region is a groove wall of the groove 26. By providing the groove 26 on the conductive post body, the mounting of the heat transfer pipe is facilitated. Or, the conductive post body is provided with a through hole, and the heat exchange region is a hole wall of the through hole. By providing the through hole on the conductive post body, the area of the heat exchange region is relatively large. The above groove 26 or through hole is configured to place the heat transfer pipe, and the heat transfer pipe exchanges heat with the polarity terminal through the heat exchange region.

The above conductive post body is specifically a columnar structure, such as a cylinder or a rectangular cylinder. During use, the conductive post body is correspondingly designed according to the specific structure of a battery cell. The forming direction of the above through hole is perpendicular to the height direction of the battery cell. Specifically, the through hole may be a circular hole, an elliptical hole, etc. In this embodiment, a circular hole is preferably used. The above groove 26 is specifically arranged on a side wall or end surface of the conductive post body. The cross section of the groove 26 may be designed into a U shape or C shape. The C-shaped groove 26 has natural tension at an opening, which facilitates the mounting of the heat transfer pipe and is conducive to more closely clamping the heat transfer pipe in the groove 26, thereby ensuring a better heat conduction effect between the polarity terminal and the heat transfer pipe.

The main difference between the polarity terminal in this embodiment and the polarity terminal of an existing battery cell is: In this embodiment, the heat exchange region of the polarity terminal is provided with an insulated layer 915, and an insulated sleeve 916 is arranged on the heat exchange region with the insulated layer 915, so that the region for heat exchange between the polarity terminal and the heat transfer pipe has double insulation. Due to the double insulation, when the polarity terminal exchanges heat with the heat transfer pipe 3, Even if one of the insulated layer 915 and the insulated sleeve 916 is damaged, reliable insulation performance may still be maintained between the heat transfer pipe and the polarity terminal of the battery cell, thereby improving the safety of the battery cell during use.

The above insulated layer 915 is formed on the groove wall of the groove 26 or the hole wall of the through hole of the conductive post body, and specifically may be achieved in the following examples:
1. A ceramic coating, namely a high-temperature electrical insulation coating, is formed on the surface of the inner wall of the groove 26 or through hole of the conductive post body, so as to form the insulated layer 915. The ceramic coating specifically may be a boron nitride, aluminum oxide, or copper fluoride coating. However, the insulated layer 915 formed in this example is prone to detachment and has relatively high processing cost.
2. A layer of insulated material (such as insulated paint) is coated on the surface of the inner wall of the groove 26 or through hole of the conductive post body, so as to form the insulated layer 915. The insulated layer 915 having this structure is convenient for on-site processing, processing steps are simple, and only the heat exchange region needs to be processed so that the processing cost is relatively low.
3. The surface of the inner wall of the groove 26 or through hole of the conductive post body is oxidized to form a hard oxide layer, so as to form the insulated layer 915. Oxidation treatment is the use of a chemical reaction between a metal surface and oxygen to form a layer of oxide film to improve the insulation performance of the metal surface. For example, an electrochemical oxidation method is used. The insulated layer 915 formed by this method is not prone to detachment and has relatively good insulation performance. The thicker the oxide layer formed by oxidation treatment, the better the insulation performance, but the heat conductivity of the oxide layer will decrease. In this embodiment, the thickness of the above hard oxide layer is preferably 20-50 um. The hard oxide layer having this thickness ensures the insulation performance while also providing better heat conductivity in the heat exchange region of the conductive post body.

In this embodiment, due to the need to ensure both the electrical conductivity of the conductive post body and the insulation ability between the conductive post body and the heat transfer pipe, only the heat exchange region needs to be oxidized. The specific treatment may be performed in the following examples.
(1) The part of the conductive post body that does not require insulation treatment is coated, the part of the conductive post body that requires insulation treatment is exposed, and then, the conductive post body is placed in a treatment embodiment for insulation treatment.
(2) The entire conductive post body is placed in a treatment embodiment for treatment to form the insulated layer 915 on the outer surface of the entire conductive post body, and then, the insulated layer 915 in the electrical connection region is removed in a machining example.

In order to ensure the reliability of insulation, an insulated sleeve 916 is also arranged in the groove 26 or through hole of the above conductive post body with the insulated layer 915, so that double insulation is formed in the heat exchange region of the conductive post body. The insulated sleeve 916 specifically may be made of an insulated material with better heat conductivity, and thus has excellent heat conductivity and also has good insulation performance. In this embodiment, the insulated sleeve 916 uses a heat-conductive plastic sleeve or a heat-conductive rubber sleeve with both better insulation performance and heat conduction performance, such as a heat-conductive silicone sleeve. Moreover, the thickness of the insulated sleeve 916 is generally 0.1-0.5 mm. The insulated sleeve 916 having this thickness may ensure good heat conductivity while ensuring excellent insulation performance.

As shown in Fig. 79, the shape of the cross section of the above insulated sleeve 916 is preferably similar to the shape of the cross section of the groove 26 or through hole, so that the insulated sleeve 916 may be closely embedded in the groove 26 or through hole of the conductive post body, so as to improve the heat conduction performance of the conductive post body. Therefore, when the insulated sleeve 916 cooperates with the groove 26, the insulated sleeve 916 may be a U-shaped sleeve or a C-shaped sleeve; and when the insulated sleeve 916 cooperates with the through hole, the insulated sleeve 916 is a circular thin-wall sleeve.

When the insulated sleeve 916 specifically cooperates with the conductive post body for mounting, the insulated sleeve 916 may be arranged in the groove 26 or through hole of the conductive post body with the insulated layer 915 by means of heat shrinkage. This example may make there almost no heat transfer gap between the insulated sleeve 916 and the conductive post body, and the heat conduction effect of the insulated sleeve 916 is better. Or, the insulated sleeve 916 may be coated with a heat conduction adhesive, then, the insulated sleeve 916 is embedded into the groove 26 or through hole of the conductive post body, and finally, the insulated sleeve 916 is compressed and closely attached in the groove 26 or through hole, so as to improve the heat transfer efficiency.

### Embodiment 36

As shown in Fig. 79, Fig. 80 and Fig. 81, this embodiment provides a high-capacity battery. The high-capacity battery includes s housing 5, a plurality of battery cells 21, and connecting members. The plurality of battery cells 21 are arranged in the housing 5 side by side, a shared chamber is arranged in the housing 5 to enable at least one of gas regions and electrolyte regions of each battery cell 21 to achieve intercommunication, and the top of the housing 5 is provided with electrode terminal avoiding holes 04 corresponding to the battery cell electrode terminal 08 of each battery cell 21. The battery cell electrode terminal 08 of each battery cell 21 is connected to the connecting member through the electrode terminal avoiding hole 04 (the electrode terminal avoiding hole is used as a channel for connection between the battery cell electrode terminal and the connecting member, wherein in one case, the battery cell electrode terminal extends out of the housing and is connected to the connecting member, and in another case, the connecting member extends into the housing and is connected to the battery cell electrode terminal).

In this embodiment, the specific structure of the high-capacity battery is as follows:
(1) Each battery cell is mounted in the housing. The housing includes an outer cylinder, an upper sealing cover, and a lower sealing cover. The top and bottom of the outer cylinder are both open. The upper sealing cover is hermetically fixed (welded) to the top of the outer cylinder, and the upper sealing cover is provided with electrode terminal avoiding holes for enabling the electrode terminal of each battery cell to extend out. The lower sealing cover is hermetically fixed (welded) to the bottom of the outer cylinder, and the lower sealing cover is provided with a shared chamber.
(2) As shown in Fig. 80 and Fig. 81, each battery cell 21 is mounted in the housing 5. The housing 5 includes an outer cylinder, a front sealing cover, and a rear sealing cover. The front part and rear part of the outer cylinder are both open. The front sealing cover is hermetically fixed (welded) to the front part of the outer cylinder, and the rear sealing cover is hermetically fixed (welded) to the rear part of the outer cylinder. The top of the outer cylinder is provided with electrode terminal avoiding holes 04 for enabling the battery cell electrode terminal 142 of each battery cell 21 to extend out. The bottom of the outer cylinder is provided with a shared chamber.
(3) Each battery cell is mounted in the housing. The housing includes a U-shaped case, a first cover plate, a third cover plate, and a second cover plate. The first cover plate and the third cover plate respectively cover two opposite open ends of the U-shaped case. The second cover plate covers the open end at the top of the U-shaped case and is hermetically connected to the open end, and the second cover plate is provided with electrode terminal avoiding holes for enabling the electrode terminal of each battery cell to extend out. The bottom of the U-shaped case is provided with a shared chamber.

In the above high-capacity battery, when each battery cell 21 is mounted in the housing 5, the battery cell electrode terminal 08 of each battery cell 21 extends out of the electrode terminal avoiding hole 04 and then is connected to the connecting member. The connecting member is the polarity terminal provided in Embodiment 35. The connecting member is provided with a first hole 42, and the first hole 42 is a blind hole. During specific connection, the bottom of the blind hole is connected to the battery cell electrode terminal 08 by fusion welding. A heat transfer pipe 3 is mounted on the connecting member of each battery cell 21, the heat transfer pipe 3 is arranged in the groove or through hole of each connecting member, and the heat transfer pipe 3 is configured to transmit the heat generated by each battery cell 21.

When an energy storage system is constructed by the plurality of high-capacity batteries, the temperature of each high-capacity battery in the entire energy storage system is controlled by a temperature control system. The energy storage system includes a plurality of battery packs, and each battery pack includes a plurality of high-capacity batteries connected in series. The temperature control system includes heat transfer pipes 3, a secondary manifold, a primary manifold, and a temperature control apparatus. The heat transfer pipe 3 is directly mounted on the connecting member of each battery cell 21, and the heat transfer pipe 3 is filled with a heat conduction medium to treat the heat generated by each cell in the high-capacity battery. the high-capacity battery in each battery pack is connected in parallel with the secondary manifold through two quick connectors, the secondary manifolds of the plurality of battery packs are connected in parallel with the primary manifold, and the primary manifold is connected to the temperature control apparatus.

## Claims

1. A connecting member, configured to be connected to electrode terminals of a plurality of battery cells to heat or cool the electrode terminals of the plurality of battery cells.

2. The connecting member as claimed in claim 1, wherein the connecting member comprises a slender member, wherein the slender member is configured to be connected to positive electrode terminals or negative electrode terminals of the plurality of battery cells in a high-capacity battery; and the slender member is provided with a clamping part for mounting a heat transfer pipe along an axial direction of the slender member.

3. The connecting member as claimed in claim 2, wherein the slender member is connected to a positive electrode terminal or a negative electrode terminal of each of the plurality of battery cells by means of welding.

4. The connecting member as claimed in claim 3, wherein the slender member is a rectangular post, the clamping part is a groove formed in the rectangular post, and a size of the groove is matched with the heat transfer pipe.

5. The connecting member as claimed in claim 4, wherein a cross section of the groove is C-shaped.

6. The connecting member as claimed in claim 3, wherein the slender member is a rectangular post, the clamping part is a first through hole formed in the rectangular post, and a diameter of the first through hole is matched with the heat transfer pipe.

7. The connecting member as claimed in claim 6, wherein the slender member is provided with a plurality of second through holes communicated with the first through hole, and a forming position of each of the plurality of second through holes needs to ensure that when the slender member is connected to each of the plurality of battery cells, a position below each of the plurality of second through holes corresponds to the positive electrode terminal or the negative electrode terminal of each of the plurality of battery cells.

8. The connecting member as claimed in claim 1, wherein the connecting member comprises a slender member, wherein the slender member is configured to be connected to positive electrode terminals or negative electrode terminals of the plurality of battery cells in a high-capacity battery; and a heat exchange channel for transmitting a heat transfer medium is formed in the slender member.

9. The connecting member as claimed in claim 8, wherein an axis of the heat exchange channel is parallel to an axis in a length direction of the slender member and extends along the length direction of the slender member.

10. The connecting member as claimed in claim 9, wherein the slender member is uniformly provided with a plurality of blind holes, a bottom of each of the plurality of blind holes is configured to be connected to a positive electrode terminal or a negative electrode terminal of each of the plurality of battery cells, and the plurality of blind holes are separated from the heat exchange channel.

11. The connecting member as claimed in claim 10, wherein a conductive post is fixed in each of the plurality of blind holes, and an outer wall of the conductive post is in close contact with an inner wall of each of the plurality of blind holes.

12. The connecting member as claimed in claim 11, wherein the bottom of each of the plurality of blind holes is connected to the positive electrode terminal or the negative electrode terminal of each of the plurality of battery cells by means of welding; and the bottom of each of the plurality of blind holes is provided with a through hole communicated with each of the plurality of blind holes, and a diameter of the through hole is smaller than a diameter of each of the plurality of blind holes.

13. The connecting member as claimed in claim 11, wherein the connecting member further comprises an electrical connection post, wherein the electrical connection post is fixed in a region at a bottom of a main body of the connecting member corresponding to each of the plurality of blind holes; the electrical connection post is configured to be in contact with the positive electrode terminal or the negative electrode terminal of each of the plurality of battery cells; and each of the plurality of blind holes extends to the electrical connection post.

14. The connecting member as claimed in any one of claims 10 to 13, wherein the slender member is provided with a clamping part for mounting a heat transfer pipe along an axial direction of the slender member.

15. The connecting member as claimed in claim 14, wherein the clamping part is a groove formed in the slender member, a size of the groove is matched with the heat transfer pipe, and the groove is separated from the heat exchange channel.

16. The connecting member as claimed in claim 15, wherein the groove is communicated with the plurality of blind holes.

17. The connecting member as claimed in claim 1, wherein the connecting member comprises a main body of the connecting member, wherein the main body of the connecting member is provided with n first holes and is connected to an electrode terminal of each of the plurality of battery cells through each of the n first holes, wherein n≥1.

18. The connecting member as claimed in claim 17, wherein the connecting member further comprises n conductive posts, wherein the n conductive posts correspond to the n first holes one by one and are fixed in the n first holes, and an outer wall of each of the n conductive posts is in close contact with an inner wall of each of the n first holes.

19. The connecting member as claimed in claim 18, wherein each of the n first holes is a blind hole, and a bottom of the blind hole is connected to the electrode terminal of each of the plurality of battery cells by means of welding; and the bottom of the blind hole is provided with a through hole communicated with the blind hole, and a diameter of the through hole is smaller than a diameter of the blind hole.

20. The connecting member as claimed in claim 19, wherein the main body of the connecting member is provided with a groove for mounting a heat transfer pipe, and a size of the groove is matched with the heat transfer pipe.

21. The connecting member as claimed in claim 19, wherein four threaded holes are uniformly distributed in regions of the main body of the connecting member around the plurality of blind holes.

22. The connecting member as claimed in claim 1, wherein the connecting member comprises a main body of the connecting member and n electrical connection posts fixed on the main body of the connecting member and protruding from the main body of the connecting member, wherein n≥1; and the main body of the connecting member is provided with n first holes in one-to-one correspondence to the n electrical connection posts, and each of the n electrical connection posts is connected to an electrode terminal of each of the plurality of battery cells through each of the n first holes.

23. The connecting member as claimed in claim 22, wherein the connecting member further comprises n conductive posts, wherein the n conductive posts correspond to the n first holes one by one and are fixed in the n first holes, and an outer wall of each of the n conductive posts is in close contact with an inner wall of each of the n first holes.

24. The connecting member as claimed in claim 23, wherein each of the n first holes is a blind hole, and the blind hole extends to each of the n electrical connection posts.

25. The connecting member as claimed in claim 24, wherein a bottom of the blind hole is connected to the electrode terminal of each of the plurality of battery cells by means of welding; and the bottom of the blind hole is provided with a through hole communicated with the blind hole, and a diameter of the through hole is smaller than a diameter of the blind hole.

26. The connecting member as claimed in any one of claims 23 to 25, wherein the main body of the connecting member is a rectangular block, and the main body of the connecting member is provided with a clamping part for mounting a heat transfer pipe.

27. The connecting member as claimed in claim 26, wherein the clamping part is a groove formed in the main body of the connecting member, and a size of the groove is matched with the heat transfer pipe.

28. The connecting member as claimed in claim 27, wherein the groove is communicated with the blind hole.

29. The connecting member as claimed in claim 1, wherein the connecting member comprises a main body of the connecting member and an electrical connection component arranged on the main body of the connecting member, wherein the main body of the connecting member is configured to be connected to an electrode terminal of each of the plurality of battery cells, and the main body of the connecting member is provided with a clamping part for mounting a liquid cooling pipe; and the electrical connection component is configured to be connected to an external electrical connector and to prevent an overflow of an insulated sealant from a part of a sealant injection region.

30. The connecting member as claimed in claim 29, wherein the electrical connection component is an inverted L-shaped plate; a vertical plate of the inverted L-shaped plate is parallel to an xz plane, and is fixed on a top surface of the connecting member to prevent the overflow of the insulated sealant from the part of the sealant injection region; the part of the sealant injection region is a top surface of the connecting member; and a transverse plate of the inverted L-shaped plate is parallel to an xy plane, and is configured to be connected to the external electrical connector or is configured to serve as an electrical connector.

31. The connecting member as claimed in claim 30, wherein the electrical connection component further comprises a first bearing plate, and the first bearing plate is parallel to the xz plane, is fixed on the transverse plate of the inverted L-shaped plate, and extends to a direction of a bottom surface of the connecting member.

32. The connecting member as claimed in claim 29, wherein the electrical connection component is a Z-shaped plate, comprising a first electrical connection plate, a second electrical connection plate, and a third connection plate; the first electrical connection plate is parallel to the xy plane, and covers and is fixed on the top surface of the connecting member; a top surface of the first electrical connection plate serves as the part of the sealant injection region; a surface, cooperating with the top surface of the connecting member, of the first electrical connection plate is provided with a liquid cooling pipe avoiding channel; the third connection plate is located between the first electrical connection plate and the second electrical connection plate and is configured to prevent the overflow of the insulated sealant from the part of the sealant injection region, and the part of the sealant injection region is the top surface of the first electrical connection plate; and the second electrical connection plate is parallel to the xy plane, and is configured to be connected to the external electrical connector.

33. The connecting member as claimed in claim 32, wherein the electrical connection component further comprises an L-shaped electrical connection plate, a vertical connection plate of the L-shaped electrical connection plate is connected to the second electrical connection plate, and a transverse connection plate of the L-shaped electrical connection plate extends towards a direction away from the first electrical connection plate, and is configured to be connected to the external electrical connector or is configured to serve as an electrical connector.

34. The connecting member as claimed in claim 29, wherein the main body of the connecting member comprises n electrical connection posts fixed on the main body of the connecting member and protruding from the main body of the connecting member, wherein n≥1; and the main body of the connecting member is provided with n first holes in one-to-one correspondence to the electrical connection posts, and each of the n electrical connection posts is connected to the electrode terminal of each of the plurality of battery cells through each of the n first holes.

35. The connecting member as claimed in claim 34, wherein the clamping part is a groove formed in the main body of the connecting member, and a size of the groove is matched with the liquid cooling pipe.

36. The connecting member as claimed in claim 1, wherein the connecting member comprises a conductive post body, wherein the conductive post body is provided with a groove or a through hole; a groove wall of the groove is provided with an insulated layer, and the insulated layer is provided with an insulated sleeve; or a hole wall of the through hole is provided with an insulated layer, and the insulated layer is provided with an insulated sleeve.

37. The connecting member as claimed in claim 36, wherein the insulated layer is a hard oxide layer with a thickness of 20 um to 50 um.

38. The connecting member as claimed in claim 36, wherein the insulated layer is an insulated paint coated in the groove or the through hole.

39. The connecting member as claimed in claim 36, wherein the insulated sleeve is a heat-conductive plastic sleeve or a heat-conductive rubber sleeve with a thickness of 0.1 mm to 0.5 mm.

40. The connecting member as claimed in claim 39, wherein the insulated sleeve is arranged in the groove or the through hole of the conductive post body with the insulated layer by means of heat shrinkage.

41. The connecting member as claimed in claim 36, wherein a cross section of the groove is C-shaped or U-shaped.

42. A high-capacity battery, comprising a main body of the high-capacity battery, heat transfer pipes, and two connecting members as claimed in any one of claims 2 to 7, wherein the main body of the high-capacity battery comprises the plurality of battery cells arranged side by side; one of the two connecting members is connected to positive electrode terminals of all of the plurality of battery cells to serve as a positive electrode terminal of the high-capacity battery, and another one of the two connecting members is connected to negative electrode terminals of all of the plurality of battery cells to serve as a negative electrode terminal of the high-capacity battery; and two heat transfer pipes are provided, and the two heat transfer pipes are respectively arranged on clamping parts of the connecting members and are configured to achieve heat exchange with electrode terminals of the plurality of battery cells.

43. An energy storage device, comprising N high-capacity batteries as claimed in claim 42 and N-1 electrical connectors, wherein N≥2; the N high-capacity batteries are arranged side by side; two adjacent high-capacity batteries of the N high-capacity batteries are connected in series through one of the N-1 electrical connectors; and a part of one of the N-1 electrical connectors is connected to a connecting member serving as a positive electrode terminal in one of the N high-capacity batteries, and the other part of one of the N-1 electrical connectors is connected to a connecting member serving as a negative electrode terminal in another one of the N high-capacity batteries.

44. The energy storage device as claimed in claim 43, wherein each of the N-1 electrical connectors comprises at least one metal aluminum plate, and the at least one metal aluminum plate is connected to a connecting member by means of screw connection.

45. The energy storage device as claimed in claim 43, wherein the electrical connector comprises at least one metal aluminum plate, and the at least one metal aluminum plate is integrated with two connecting members that are close to each other in the two adjacent high-capacity batteries of the N high-capacity batteries.

46. A high-capacity battery, comprising a plurality of battery cells and two connecting members as claimed in any one of claims 8 to 16, wherein the plurality of battery cells are sequentially arranged along a same direction; and one of the two connecting members is connected to positive electrode terminals of all of the plurality of battery cells, and another one of the two connecting members is connected to negative electrode terminals of all of the plurality of battery cells.

47. The high-capacity battery as claimed in claim 46, wherein the high-capacity battery further comprises a housing, wherein the plurality of battery cells are sequentially arranged in the housing along a same direction; a top plate of the housing is provided with electrode terminal avoiding holes corresponding to electrode terminals of each of the plurality of battery cells, and regions, corresponding to the electrode terminal avoiding holes of the housing are fixedly sealed with cases of the plurality of battery cells; and an electrical connection post of each of the two connecting members extends into each of the electrode terminal avoiding holes and is electrically connected to an electrode terminal of each of the plurality of battery cells.

48. A high-capacity battery, comprising m battery cells and a first electrical connector, wherein each of the m battery cells comprises a positive electrode terminal and a negative electrode terminal, the positive electrode terminal and the negative electrode terminal are respectively connected with different connecting members as claimed in any one of claims 17 to 21, and a main body of each of the connecting members is provided with a first hole; and the connecting members of the m battery cells are connected through the first electrical connector to achieve series or parallel connection between the m battery cells.

49. A high-capacity battery, comprising m battery cells and two connecting members as claimed in any one of claims 17 to 21, wherein a main body of each of the two connecting members is provided with m first holes; and one of the two connecting members is connected to positive electrode terminals of all of the m battery cells, and another one of the two connecting members is connected to negative electrode terminals of all of the m battery cells, wherein m>1.

50. The high-capacity battery as claimed in claim 48 or 49, wherein the high-capacity battery further comprises heat transfer pipes, wherein the each of the heat transfer pipes is mounted in a groove on the main body of each of the connecting members.

51. The high-capacity battery as claimed in claim 50, wherein the heat transfer pipes are arranged in a serpentine manner to connect all of the connecting members in series.

52. An energy storage device, comprising a plurality of high-capacity batteries as claimed in any one of claims 49 to 51 and a second electrical connector, wherein the plurality of high-capacity batteries are arranged side by side; two adjacent high-capacity batteries of the plurality of high-capacity batteries are connected in series through the second electrical connector; and one side of the second electrical connector is connected to a connecting member on positive electrode terminals of the battery cells of one of the two adjacent high-capacity batteries, and the other side of the second electrical connector is connected to a connecting member on negative electrode terminals of the battery cells of another one of the two adjacent high-capacity batteries.

53. A high-capacity battery, comprising a housing, m battery cells arranged in the housing, and 2m connecting members as claimed in any one of claims 22 to 28, wherein m>1; an electrical connection post is fixed on a main body of each of the 2m connecting members; the housing is composed of a cylinder and end plates fixed at two ends of the cylinder; a top plate of the cylinder is provided with electrode terminal avoiding holes corresponding to electrode terminals of each of the m battery cells, and regions of the housing corresponding to the electrode terminal avoiding holes and cases of the m battery cells are fixedly sealed; and a positive electrode terminal of each of the m battery cells corresponds to one of the 2m connecting members, and a negative electrode terminal of each of the m battery cells corresponds to another one of the 2m connecting members, and the electrical connection post of each of the 2m connecting members extends into each of the electrode terminal avoiding holes and is respectively connected to an electrode terminal of corresponding battery cell of the m battery cells.

54. A high-capacity battery, comprising a housing, m battery cells arranged in the housing, and two connecting members as claimed in any one of claims 22 to 28, wherein m>1; m electrical connection posts are fixed on a main body of each of the m connecting members; the housing is composed of a cylinder and end plates fixed at two ends of the cylinder; a top plate of the cylinder is provided with electrode terminal avoiding holes corresponding to electrode terminals of each of the m battery cells, and regions of the housing corresponding to the electrode terminal avoiding holes and cases of the m battery cells are fixedly sealed; and m electrical connection posts of one of the two connecting members respectively extend into corresponding electrode terminal avoiding holes and are connected to positive electrode terminals of all of the m battery cells, and m electrical connection posts of another one of the two connecting members respectively extend into corresponding electrode terminal avoiding holes and are connected to negative electrode terminals of all of the m battery cells.

55. An energy storage device, comprising a plurality of high-capacity batteries as claimed in claim 53 or 54 and electrical connectors, wherein the plurality of high-capacity batteries are arranged side by side; two adjacent high-capacity batteries of the plurality of high-capacity batteries are connected in series through one of the electrical connectors; and one side of each of the electrical connectors is connected to a connecting member on positive electrode terminals of battery cells of one of the plurality of high-capacity batteries, and the other side of each of the electrical connectors is connected to a connecting member on negative electrode terminals of battery cells of another one of the plurality of high-capacity batteries.

56. A high-capacity battery, comprising a housing, a plurality of battery cells, and connecting members, wherein the plurality of battery cells are arranged in the housing side by side, a shared chamber is arranged in the housing to enable at least one of gas regions and electrolyte regions of each of the plurality of battery cells to achieve intercommunication, and a top of the housing is provided with electrode terminal avoiding holes corresponding to battery cell electrode terminals of each of the plurality of battery cells; the battery cell electrode terminals of each of the plurality of battery cells are connected to the connecting members through the electrode terminal avoiding holes; and the connecting members are a polarity terminal as claimed in any one of claims 36 to 41, and a heat transfer pipe is arranged in a groove or a through hole of each of the connecting members of each of the plurality of battery cell.
